# EUROPEAN PATENT APPLICATION

(11) **EP 4 343 426 A1**
(43) Date of publication of application: **27.03.2024**
(21) Application number: 22819586.3
(22) Date of filing: 08.06.2022
(51) Int. Cl.: G03B 9/06

(54) **IRIS DIAPHRAGM, CAMERA MODULE AND ELECTRONIC APPARATUS**

(30) Priority: 11.06.2021 CN 202110654866; 10.09.2021 CN 202111061084
(71) Applicant: Huawei Technologies Co., Ltd., Shenzhen, Guangdong 518129 (CN)
(72) Inventor: LIU, Xiaohan, Shenzhen, Guangdong 518129 (CN); LI, Dengfeng, Shenzhen, Guangdong 518129 (CN); YOU, Zhongcheng, Shenzhen, Guangdong 518129 (CN); QIN, Shixin, Shenzhen, Guangdong 518129 (CN)
(74) Representative: Huawei European IPR
(86) International application number: PCT/CN2022/097698
(87) International publication number: WO 2022/257989

(57) **Abstract**

This application provides a variable aperture, a camera module, and an electronic device. The variable aperture includes a fixing base, a rotating support, a mover, a stator, and a plurality of blades. The rotating support is disposed on an inner side of the fixing base. In this way, on one hand, the rotating support does not interfere with components on an outer side of the fixing base, thereby ensuring accuracy of a rotation angle of the rotating support in a rotating process; and on another hand, the components on the outer side of the fixing base may be disposed close to the fixing base, and the components are arranged more compactly, thereby facilitating miniaturization of the variable aperture. In addition, the mover is fixedly connected to an outer peripheral side surface of the rotating support, and the stator is disposed facing the mover. In this way, on one hand, stacking of the mover and the stator in a thickness direction of the camera module is avoided; and on another hand, the mover, the stator, the fixing base, and the rotating support may be arranged more compactly.

## Description

This application claims priority to Chinese Patent Application No. 202110654866.4, filed with the China National Intellectual Property Administration on June 11, 2021 and entitled "VARIABLE APERTURE, CAMERA MODULE, AND ELECTRONIC DEVICE", and to Chinese Patent Application No. 202111061084.6, filed with the China National Intellectual Property Administration on September 10, 2021 and entitled "VARIABLE APERTURE, CAMERA MODULE, AND ELECTRONIC DEVICE", which are incorporated herein by reference in their entireties.

### TECHNICAL FIELD

This application relates to the field of shooting technologies, and in particular, to a variable aperture, a camera module, and an electronic device.

### BACKGROUND

In recent years, major manufacturers have put forward stricter requirements on imaging quality of camera modules. A size of an aperture hole of a variable aperture is changed to adjust an amount of light entering the variable aperture, thereby improving imaging quality of the camera module. A conventional variable aperture includes a movable part, a rotating part, and a plurality of blades. The movable part is connected to the rotating part. When the movable part moves, the movable part pulls the rotating part to rotate, thereby pushing the plurality of blades to open and close. However, large moving space of the movable part and large space occupied by the movable part are not conducive to miniaturization of the variable aperture.

### SUMMARY

This application provides a variable aperture that can be miniaturized, a camera module, and an electronic device.

According to a first aspect, an embodiment of this application provides a variable aperture. The variable aperture includes a fixing base, a rotating support, a mover, a stator, and a plurality of blades. The fixing base and the rotating support each may be in a ring shape. The rotating support is located on an inner side of the fixing base, and is rotatably connected to the fixing base, and the rotating support encloses space. The plurality of blades may be distributed in an annular manner. The plurality of blades jointly enclose a light transmission hole, and the light transmission hole of the plurality of blades is in communication with the space. Each blade is rotatably connected to the fixing base and slidably connected to the rotating support.

The mover is fixedly connected to an outer peripheral side surface of the rotating support, the stator is fixedly connected to the fixing base, and the stator faces the mover. The mover is configured to drive, in cooperation with the stator, the rotating support to rotate relative to the fixing base, and each blade to slide relative to the rotating support and rotate relative to the fixing base. An aperture of the light transmission hole of the plurality of blades changes.

It may be understood that, when the rotating support is disposed on an outer side of the fixing base, space needs to be reserved between the rotating support and a component on the outer side of the fixing base, to avoid mutual interference between the rotating support and the component on the outer side of the fixing base. In this way, a structure of the variable aperture is large, and this is not conducive to miniaturization of the variable aperture. However, in this implementation, the rotating support is disposed on the inner side of the fixing base, the rotating support does not interfere with the component on the outer side of the fixing base, and the component on the outer side of the fixing base may be disposed close to the fixing base, thereby facilitating miniaturization of the variable aperture.

In addition, the rotating support is disposed on the inner side of the fixing base, so that when the rotating support rotates relative to the fixing base, the rotating support does not collide with the component on the outer side of the fixing base, to further ensure that a size of the aperture of the light transmission hole of the plurality of blades in different states can be accurately controlled.

In this implementation, the mover is fixedly connected to the outer peripheral side surface of the rotating support, and the stator faces the mover. On one hand, stacking of the mover and the stator in a thickness direction of a camera module is avoided, and on another hand, the mover, the stator, the fixing base, and the rotating support may be arranged more compactly. This facilitates miniaturization of the variable aperture.

In a possible implementation, the rotating support being located on the inner side of the fixing base includes that a projection of the rotating support on a reference plane at least partially overlaps a projection of the fixing base on the reference plane, and the reference plane is parallel to an optical axis direction of the variable aperture.

In a possible implementation, the outer peripheral side surface of the rotating support is parallel to the optical axis direction of the variable aperture.

In a possible implementation, that the stator faces the mover includes that a plane on which the stator is located and a plane on which the mover is located are parallel to the optical axis direction of the variable aperture.

In a possible implementation, the mover is a first magnet, the stator is the first coil, and the first coil faces the first magnet. It may be understood that, that the first coil faces the first magnet may be that a plane on which the first coil is located and a plane on which the first magnet is located are parallel to an optical axis of the variable aperture, or an axis of a winding wire of the first coil is perpendicular to the optical axis of the variable aperture, and the plane on which the first magnet is located is parallel to the optical axis of the variable aperture. In this case, the first coil may be arranged vertically. The first magnet is configured to: when the first coil is powered on, the first magnet is subject to an acting force, and the first magnet drives the rotating support to rotate relative to the fixing base, and each blade to slide relative to the rotating support and rotate relative to the fixing base, where the aperture of the light transmission hole of the plurality of blades changes.

In this implementation, the first magnet is fixedly connected to the outer peripheral side surface of the rotating support, and the first coil is fixedly connected to the fixing base. Therefore, when the first coil is powered on, the first magnet is subject to the acting force, and the first magnet can drive the rotating support to rotate relative to the fixing base. It may be understood that, on one hand, in a structure of a drive apparatus including the first magnet and the first coil, a conducting wire does not need to be disposed between the rotating support and the fixing base, and the structure of the drive apparatus including the first magnet and the first coil is simple and neat. On another hand, the first magnet and the first coil do not need to pull, through moving, the rotating support to rotate. In this way, the variable aperture does not need to provide additional space for moving of the first magnet and the first coil. Space occupied by the first magnet and the first coil is small, thereby facilitating miniaturization of the variable aperture.

In this implementation, the first magnet is fixedly connected to the outer peripheral side surface of the rotating support, and the first coil is disposed facing the first magnet. On one hand, stacking of the first magnet and the first coil in the thickness direction of the camera module is avoided, and on another hand, the first magnet, the first coil, the fixing base, and the rotating support may be arranged more compactly. In addition, compared with a solution in which the first coil is tiled on the fixing base, this implementation enables the first coil to be vertically and fixedly connected to the fixing base, so that on one hand, space of the rotating support in a Z-axis direction can be used, and on another hand, an area occupied by the first coil on an X-Y plane can be small.

In a possible implementation, a direction in which the south pole of the first magnet faces the north pole of the first magnet is parallel to a circumferential direction of the rotating support. In this case, a direction of an ampere force applied to the first magnet may be tangent to an axial direction of the rotating support, and is parallel to a plane on which the rotating support is located. Most of the ampere force applied to the first magnet may be used to drive the rotating support to rotate. A utilization rate of the ampere force applied to the first magnet is high. In addition, the first coil disposed facing the first magnet may be disposed straightly to a large extent, thereby preventing the first coil from occupying space on the X-Y plane to a large extent.

In a possible implementation, the outer peripheral side surface of the rotating support recesses toward a center of the rotating support to form a first mounting groove, and at least a part of the first magnet is fixedly connected to the first mounting groove. In this case, at least the part of the first magnet may be embedded in the rotating support. In this way, at least the part of the first magnet has an overlapping area with the rotating support, and at least the part of the first magnet does not additionally increase a size of the variable aperture, thereby facilitating miniaturization of the variable aperture.

In a possible implementation, the variable aperture further includes a second magnet and a second coil. The second magnet is fixedly connected to the outer peripheral side surface of the rotating support, the second coil is fixedly connected to the fixing base, and the second coil faces the second magnet. The second coil is configured to, when powered on, enable the second magnet to drive the rotating support to rotate relative to the fixing base. A direction in which the second magnet drives the rotating support to rotate relative to the fixing base is the same as a direction in which the first magnet drives the rotating support to rotate relative to the fixing base. It may be understood that, that the second coil faces the second magnet may be that a plane on which the second coil is located and the second magnet are disposed face to face.

It may be understood that, the second magnet is fixedly connected to the outer peripheral side surface of the rotating support, and the second coil is fixedly connected to the fixing base, so that when the second coil is powered on, the second magnet can drive the rotating support to rotate relative to the fixing base. On one hand, a structure of a drive apparatus including the second magnet and the second coil is simple. On another hand, the second magnet and the second coil do not need to pull, through moving, the rotating support to rotate. In this way, the variable aperture does not need to provide additional space for moving of the second magnet and the second coil. Space occupied by the second magnet and the second coil is small, thereby facilitating miniaturization of the variable aperture.

In this implementation, the second magnet is fixedly connected to the outer peripheral side surface of the rotating support, and the second coil is disposed facing the second magnet. On one hand, stacking of the second magnet and the second coil in the thickness direction of the camera module is avoided, and on another hand, the second magnet, the second coil, the fixing base, and the rotating support may be arranged more compactly. In addition, compared with a solution in which the second coil is tiled on the fixing base, this implementation enables the second coil to be vertically and fixedly connected to the fixing base, so that on one hand, the space of the rotating support in the Z-axis direction can be used, and on another hand, an area occupied by the second coil on the X-Y plane can be small.

In addition, the first coil, the first magnet, the second coil, and the second magnet cooperate with each other, so that force uniformity of the rotating support in a rotating process can be greatly improved, to avoid shaking or tilting of the rotating support in the rotating process.

In a possible implementation, the second magnet and the first magnet are center-symmetric with respect to the rotating support. In this way, forces exerted by the second magnet and the first magnet on the rotating support may be symmetrical, and stability of the rotating support is high, that is, the rotating support is not prone to shake or tilt in the rotating process.

In a possible implementation, the outer peripheral side surface of the rotating support recesses toward the center of the rotating support to form a second mounting groove, and at least a part of the second magnet is fixedly connected to the second mounting groove. In this case, at least the part of the second magnet may be embedded in the rotating support. In this way, at least the part of the second magnet has an overlapping area with the rotating support, and at least the part of the second magnet does not additionally increase the size of the variable aperture, thereby facilitating miniaturization of the variable aperture.

In a possible implementation, the fixing base is provided with a first through hole and a second through hole that are disposed at intervals, and the first through hole and the second through hole form openings on an inner peripheral side surface and an outer peripheral side surface of the fixing base. The variable aperture further includes a flexible circuit board, and the flexible circuit board may be in a ring shape. The flexible circuit board surrounds the outer peripheral side surface of the fixing base, and is fixedly connected to the outer peripheral side surface of the fixing base.

The first coil is fixedly connected to an inner peripheral side surface of the flexible circuit board and electrically connected to the flexible circuit board, and the first coil is located in the first through hole. The second coil is fixedly connected to the inner peripheral side surface of the flexible circuit board and electrically connected to the flexible circuit board, and the second coil is located in the second through hole.

It may be understood that the first coil is disposed in the first through hole, the second coil is disposed in the second through hole, and the first coil and the second coil have overlapping areas with the fixing base in all directions. In this way, the first coil and the second coil may use space in which the fixing base is located, and the first coil and the second coil do not additionally increase the size of the variable aperture, thereby facilitating miniaturization of the variable aperture.

In a possible implementation, the variable aperture further includes a drive chip. The drive chip is fixedly connected to the flexible circuit board and electrically connected to the flexible circuit board. The drive chip is configured to supply power to the first coil and the second coil.

In a possible implementation, the drive chip, the first coil, and the second coil are disposed in series. A sum of a voltage of the first coil and a voltage of the second coil is greater than one sixth of a power supply voltage of the drive chip. In this way, more voltages may be allocated to the first coil and the second coil, thereby reducing power consumption of the drive chip, and further reducing heat generated by the drive chip. In this way, the heat generated by the drive chip does not easily affect a peripheral component (for example, a lens assembly) of the drive chip.

In a possible implementation, a resistance value of the second coil is greater than a resistance value of the first coil. In this way, the second coil obtains more voltages. Because the second coil is disposed away from the drive chip, heat generated by the second coil does not easily increase a temperature of a region in which the drive chip is located.

In a possible implementation, the variable aperture further includes an auxiliary resistor. The auxiliary resistor is fixedly connected to the flexible circuit board and electrically connected to the flexible circuit board. The drive chip, the first coil, the second coil, and the auxiliary resistor are disposed in series. It may be understood that an auxiliary resistor is connected in series in a circuit of the drive chip, so that when the drive chip provides a current signal for the first coil and the second coil, the auxiliary resistor can implement voltage division, thereby reducing power consumption of the drive chip, and further reducing heat generated by the drive chip. In this way, the heat generated by the drive chip does not easily affect the peripheral component (for example, the lens assembly) of the drive chip.

In a possible implementation, the auxiliary resistor is located in a region enclosed by the second coil. In this way, arrangement between the auxiliary resistor, the second coil, and the flexible circuit board is more compact, thereby facilitating miniaturization of the variable aperture.

In a possible implementation, the drive chip is located in a region enclosed by the first coil, and the drive chip is further configured to detect magnetic field strength of the first magnet in different positions. The drive chip has a function of "one object for two purposes", and this is conducive to miniaturization of the variable aperture.

In a possible implementation, the variable aperture further includes a first magnetic conductive sheet and a second magnetic conductive sheet. The first magnetic conductive sheet and the second magnetic conductive sheet are fixedly connected to the fixing base at intervals, the first magnetic conductive sheet is located around the first magnet, and the second magnetic conductive sheet is located around the second magnet.

In a possible implementation, the fixing base has a plurality of rotation columns disposed at intervals, and the rotating support has a plurality of guide columns disposed at intervals. Each blade is provided with a rotation hole and a guide hole, the plurality of rotation columns are rotatably connected to the rotation holes of the plurality of blades in a one-to-one correspondence, and the plurality of guide columns are slidably connected to the guide holes of the plurality of blades in a one-to-one correspondence.

In a possible implementation, the blade is further provided with a first auxiliary hole, and the first auxiliary hole is disposed at intervals with the guide hole and the rotation hole, and is located around the guide hole. It may be understood that, in a process in which the guide column is disposed in the guide hole, because a part between the guide hole and the first auxiliary hole is elastic to an extent, the part between the guide hole and the first auxiliary hole may provide sufficient assembly space for the guide column through deformation, thereby reducing assembly difficulty between the guide column and the guide hole. In addition, after the guide column is disposed in the guide hole, the part between the guide hole and the first auxiliary hole may squeeze the guide column through deformation, so that the guide column can cooperate with the guide hole through interference, that is, zero-gap cooperation can be implemented between the guide column and the guide hole. In this way, in an opening and closing process of the blades, the guide column does not shake due to a gap between the guide column and the guide hole. In this case, the size of the aperture of the light transmission hole 650 of the plurality of blades is more controllable, and precision is higher.

In a possible implementation, the blade is further provided with a second auxiliary hole, and the second auxiliary hole is disposed at intervals with the guide hole and the rotation hole, and is located around the rotation hole.

It may be understood that, in a process in which the rotation column is disposed in the rotation hole, because a part between the rotation hole and the second auxiliary hole is elastic to an extent, the part between the rotation hole and the second auxiliary hole may provide sufficient assembly space for the rotation column through deformation, thereby reducing assembly difficulty between the rotation column and the rotation hole. In addition, after the rotation column is disposed in the rotation hole, the part between the rotation hole and the second auxiliary hole may squeeze the rotation column through deformation, so that the rotation column can cooperate with the rotation hole through interference. In this way, in an opening and closing process of the plurality of blades, the rotation column does not shake due to a gap between the rotation column and the rotation hole. In this case, the size of the aperture of the light transmission hole of the plurality of blades is more controllable, and precision is higher.

In addition, through mutual cooperation between the second auxiliary hole and the rotation hole, assembly difficulty of implementing zero cooperation between the rotation column and the rotation hole can also be reduced. It may be understood that, in a process of machining the rotation column and the rotation hole, an error usually exists in sizes of the rotation column and the rotation hole due to a factor such as a machining error or a mechanical error. When an aperture of the rotation hole is smaller than a diameter of the rotation column, it is difficult to assemble the rotation column into the rotation hole. The rotation column in this implementation may be easily assembled in the rotation hole through deformability of a second connecting rib.

In a possible implementation, the variable aperture further includes a gasket, and the gasket is fixedly connected to the rotating support, and is located on a side that is of the plurality of blades and that faces the rotating support. The gasket has a light transmission hole, and the light transmission hole of the gasket is in communication with the light transmission hole of the plurality of blades and the space of the rotating support.

The variable aperture includes an initial state, an intermediate state, and an end state. When the variable aperture is in the initial state or the intermediate state, a maximum aperture of the light transmission hole of the plurality of blades is less than an aperture of the light transmission hole of the gasket. When the variable aperture is in the end state, a minimum aperture of the light transmission hole of the plurality of blades is greater than or equal to the aperture of the light transmission hole of the gasket.

It may be understood that an aperture hole of the variable aperture has a large quantity of gears. When the variable aperture is applied to the camera module, shooting quality is improved.

In a possible implementation, an inner edge of each blade includes a first segment and a second segment connected to the first segment. The first segment is in an arc shape, and the second segment is in a straight-line shape or an arc shape.

The intermediate state of the variable aperture includes a first intermediate state and a second intermediate state. When the variable aperture is in the initial state, a shape of the light transmission hole of the plurality of blades is a polygon, and the light transmission hole of the plurality of blades is formed by a part of the first segment of each blade. When the variable aperture is in the first intermediate state, the shape of the light transmission hole of the plurality of blades is a circle, and the light transmission hole of the plurality of blades is formed by the first segment of each blade. When the variable aperture is in the second intermediate state, the shape of the light transmission hole of the plurality of blades is a polygon, and the light transmission hole of the plurality of blades is formed by a part of the second segment of each blade.

It may be understood that an aperture hole of the variable aperture in this implementation has a large quantity of gears. When the variable aperture is applied to the camera module, shooting quality is improved.

In a possible implementation, the variable aperture further includes a ball, and the ball is rotatably connected to the fixing base and rollingly connected to the rotating support. It may be understood that, compared with a rotating support directly rotatably connected to the fixing base, the rotating support in this implementation is connected to the fixing base by using the ball. The ball can reduce friction between the rotating support and the fixing base, thereby reducing a drive force used by the first magnet to drive the rotating support to rotate, that is, reducing a magnitude of a current input to the first coil, and further facilitating energy reduction of the variable aperture.

In a possible implementation, the fixing base includes a base and a fixing support, and the fixing support is connected to a top of the base. The base is provided with a first groove, the fixing support is provided with a second groove, the first groove and the second groove are assembled into a rotating groove, and the ball is rotatably connected in the rotating groove. The rotating support is further provided with a rolling groove, the rolling groove extends along the circumferential direction of the rotating support, the rolling groove is disposed opposite to the rotating groove, and the ball is slidably connected in the rolling groove.

According to a second aspect, an embodiment of this application provides a camera module. The camera module includes a lens assembly and the variable aperture described above, and the variable aperture is fixedly connected to the lens assembly, and is located on a light inlet side of the lens assembly. It may be understood that when the variable aperture is applied to the camera module, the camera module may also be miniaturized.

In a possible implementation, the lens assembly includes a motor and a lens. The lens is disposed in the motor, and the motor is configured to drive the lens to move along an optical axis direction of the camera module. The variable aperture is fixedly connected to the lens, and is located on a light inlet side of the lens.

According to a third aspect, an embodiment of this application provides an electronic device. The electronic device includes a housing and the foregoing camera module, and the camera module is disposed in the housing. It may be understood that when the camera module is applied to the electronic device, the electronic device may also be miniaturized.

### BRIEF DESCRIPTION OF DRAWINGS

To describe the technical solutions in embodiments of this application, the following describes the accompanying drawings used in embodiments of this application.
FIG. 1 is a schematic diagram of a structure of an electronic device according to an embodiment of this application;
FIG. 2 is a partial schematic cross-sectional view of the electronic device shown in FIG. 1 at a line A-A;
FIG. 3 is a partial schematic exploded view of a camera module of the electronic device shown in FIG. 1;
FIG. 4 is a partial schematic exploded view of a variable aperture of the camera module shown in FIG. 3;
FIG. 5 is a schematic diagram of a structure of a base shown in FIG. 4 at different angles;
FIG. 6 is a schematic diagram of a structure of a fixing support shown in FIG. 4 at different angles;
FIG. 7 is a partial schematic cross-sectional view of the variable aperture shown in FIG. 3;
FIG. 8 is a schematic diagram of a structure of a rotating support shown in FIG. 4 at different angles;
FIG. 9 is a schematic diagram of a structure of a part of the variable aperture shown in FIG. 3 at different angles;
FIG. 10 is a partial schematic cross-sectional view of the variable aperture shown in FIG. 3;
FIG. 11 is a schematic assembly diagram of a base, a fixing support, and a ball shown in FIG. 4;
FIG. 12 is a schematic assembly diagram of a rotating support and a ball shown in FIG. 4;
FIG. 13 is a schematic diagram of a partial structure of the variable aperture shown in FIG. 3;
FIG. 14 is a schematic assembly diagram of a flexible circuit board, a first coil, a second coil, and a drive chip shown in FIG. 4 at different angles;
FIG. 15 is a schematic diagram of a partial structure of the variable aperture shown in FIG. 3;
FIG. 16 is a schematic cross-sectional view of a part of the variable aperture shown in FIG. 15 at a line B-B;
FIG. 17a is a schematic diagram of a structure of an implementation in which a first coil and a first magnet drive a rotating support to rotate;
FIG. 17b is a schematic diagram of a partial structure of the variable aperture shown in FIG. 3;
FIG. 17c is a top view when a first magnetic conductive sheet and a first magnet shown in FIG. 16 are in a first position;
FIG. 17d is a top view when a first magnetic conductive sheet and a first magnet shown in FIG. 16 are in a second position;
FIG. 18 is a schematic diagram of a partial structure of the variable aperture shown in FIG. 3;
FIG. 19 is a schematic diagram of a structure of an implementation of a blade shown in FIG. 4 at a different angle;
FIG. 20 is a schematic diagram of a partial structure of the variable aperture shown in FIG. 3;
FIG. 21 is a schematic diagram of a structure of a part of the variable aperture shown in FIG. 20 in an intermediate state;
FIG. 22 is a schematic diagram of a structure of a part of the variable aperture shown in FIG. 20 in another intermediate state;
FIG. 23 is a schematic diagram of a structure of a part of the variable aperture shown in FIG. 20 in an end state;
FIG. 24 is a schematic diagram of a partial structure of the variable aperture shown in FIG. 3;
FIG. 25 is a schematic diagram of a structure of another implementation of a blade shown in FIG. 4;
FIG. 26 is a schematic diagram of a partial structure of a variable aperture in another implementation according to an embodiment of this application;
FIG. 27a is a schematic diagram of a partial structure of a variable aperture in another implementation according to an embodiment of this application;
FIG. 27b is a schematic cross-sectional view of a part of the variable aperture shown in FIG. 27a at a line C-C;
FIG. 28 is a schematic circuit diagram of a drive chip, a first coil, a second coil, and an auxiliary resistor shown in FIG. 27a;
FIG. 29 is a schematic cross-sectional view of another implementation of a part of the variable aperture shown in FIG. 27a at a line C-C; and
FIG. 30 is a schematic circuit diagram of a drive chip, a first coil, and a second coil in another implementation according to this application.

### DESCRIPTION OF EMBODIMENTS

For ease of understanding, the following first explains and describes English abbreviations and related technical terms used in embodiments of this application.

When a lens is used as a boundary, a side on which a shot object is located is an object side.

When a lens is used as a boundary, a side on which an image of a shot object is located is an image side.

An optical axis is an axis perpendicularly passing through a center of a lens. An optical axis of a lens is an axis passing through a center of each lens of the lens. When rays parallel to the optical axis enter a convex lens, an ideal convex lens converges all the rays at one point behind the lens. This point at which all the rays converge is a focal point.

The following describes embodiments of this application with reference to the accompanying drawings in embodiments of this application.

In descriptions of embodiments of this application, it should be noted that, unless otherwise clearly specified and limited, the term "connection" should be understood in a broad sense. For example, the "connection" may be a detachable connection or an undetachable connection, or may be a direct connection or an indirect connection through an intermediate medium. A "fixed connection" means that two parts are connected to each other and a relative position relationship remains unchanged after the connection. A "rotatable connection" means that two parts are connected to each other and can rotate relative to each other after being connected. A "slidable connection" means that two parts are connected to each other and can slide relative to each other after being connected. Orientation terms mentioned in embodiments of this application, for example, "top", "bottom", "inner", and "outer", are merely directions with reference to the accompanying drawings. Therefore, the orientation terms are used to better and more clearly describe and understand embodiments of this application, instead of indicating or implying that an apparatus or element needs to have a specific orientation and be constructed and operated in the specific orientation, and therefore cannot be understood as a limitation on embodiments of this application.

In addition, mathematical concepts mentioned in embodiments of this application, such as symmetric, equal, parallel, and perpendicular, are limitations described in terms of a current process level, rather than absolutely strict definitions in mathematics. A small quantity of deviations are allowed, and "approximately symmetric", "approximately equal", "approximately parallel", "approximately perpendicular", and the like are allowable. For example, that A is parallel to B means that A and B are parallel or approximately parallel to each other, and an included angle between A and B may range from 0 degrees to 10 degrees. That A is perpendicular to B means that A and B are perpendicular or approximately perpendicular to each other, and an included angle between A and B ranges from 80 degrees to 100 degrees.

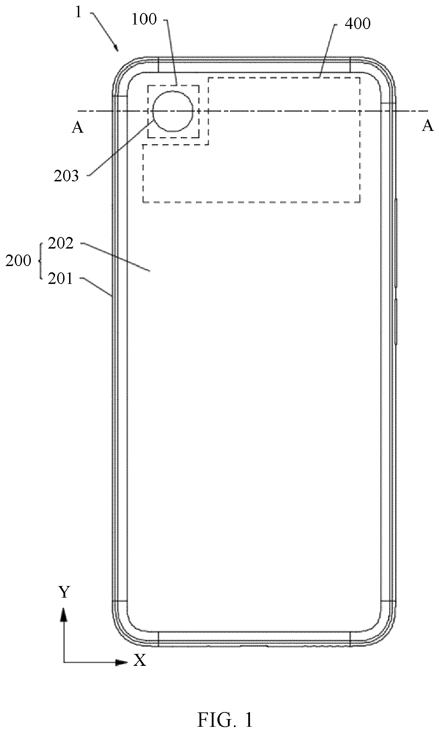

Refer to FIG. 1. FIG. 1 is a schematic diagram of a structure of an electronic device 1 according to an embodiment of this application. The electronic device 1 may be a device having a shooting function, for example, a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, a pair of augmented reality (augmented reality, AR) glasses, an AR helmet, a pair of virtual reality (virtual reality, VR) glasses, or a VR helmet. In the embodiment shown in FIG. 1, descriptions are provided by using an example in which the electronic device 1 is a mobile phone.

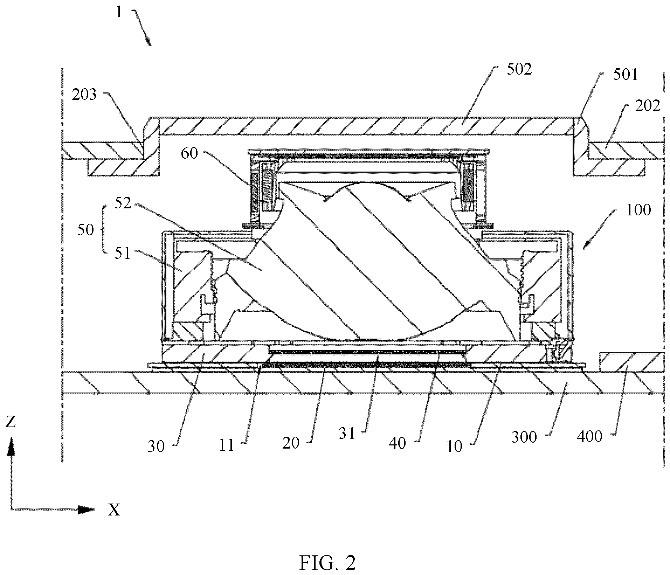

Refer to FIG. 1 and FIG. 2. FIG. 2 is a partial schematic cross-sectional view of the electronic device 1 shown in FIG. 1 at a line A-A. The electronic device 1 includes a camera module 100, a housing 200, a screen 300, and a host circuit board 400. It should be noted that FIG. 1, FIG. 2, and the following related accompanying drawings merely show examples of some components included in the electronic device 1. Actual shapes, actual sizes, actual positions, and actual structures of these components are not limited by FIG. 1, FIG. 2, and the following accompanying drawings. In addition, because the host circuit board 400 and the camera module 100 are an internal structure of the electronic device 1, FIG. 1 schematically shows the host circuit board 400 and the camera module 100 by using dashed lines. For ease of description, a width direction of the electronic device 1000 is defined as an X axis, a length direction of the electronic device 1000 is a Y axis, and a thickness direction of the electronic device 1000 is a Z axis. It may be understood that a coordinate system of the electronic device 1000 may be flexibly set according to a specific actual requirement.

In another embodiment, when the electronic device 1 is a device in another form, the electronic device 1 may not include the screen 300 or the host circuit board 400.

For example, the housing 200 includes a host frame 201 and a rear cover 202, and the rear cover 202 is fixedly connected to a side of the host frame 201. The screen 300 is fastened to a side that is of the host frame 201 and that is away from the rear cover 202. The screen 300, the host frame 201, and the rear cover 202 may jointly enclose the inside of the electronic device 1. The inside of the electronic device 1 may be used to accommodate components of the electronic device 1, for example, a battery, a receiver, and a microphone. The screen 300 may be configured to display an image or the like. The screen 300 may be a flat screen or a curved screen. A display of the screen 300 may be an organic light-emitting diode (organic light-emitting diode, OLED) display, an active-matrix organic light-emitting diode (active-matrix organic light-emitting diode, AMOLED) display, a liquid crystal display (liquid crystal display, LCD), or the like.

Refer to FIG. 1 and FIG. 2 again. The host circuit board 400 is fastened inside the electronic device 1. The host circuit board 400 may be provided with a chip such as a central processing unit (central processing unit, CPU), a graphics processing unit (graphics processing unit, GPU), or a universal flash storage (universal flash storage, UFS).

In addition, the camera module 100 is disposed inside the electronic device 1, and the camera module 100 may be configured to collect ambient light outside the electronic device 1. The camera module 100 may be electrically connected to the host circuit board 400. In this way, signals may be transmitted between the camera module 100 and the host circuit board 400. It may be understood that the camera module 100 may be a rear-facing camera module, a front-facing camera module, or the like. In addition, the camera module 100 may be an upright camera module (for example, an optical axis direction of the camera module is a Z-axis direction), or may be a periscope camera module (for example, an optical axis direction of the camera module may be any direction on an X-Y plane). In this implementation, an example in which the camera module 100 is both a rear-facing camera module and an upright camera module is used for description.

For example, the rear cover 202 is provided with a light through hole 203, and the light through hole 203 may connect the inside of the electronic device 1 to the outside of the electronic device 1. The electronic device 1 further includes a camera decoration part 501 and a cover 502, and the cover 502 is fixedly connected to an inner surface of the camera decoration part 501. A part of the camera decoration part 501 may be fastened to an inner surface of the rear cover 202, and a part of the camera decoration part 501 is in contact with a hole wall of the light through hole 203. Through cooperation between the camera decoration part 501 and the cover 502, external water or dust can be prevented from entering the electronic device 1 through the light through hole 203. A material of the cover 502 may be a transparent material, for example, glass or plastic. Ambient light outside the electronic device 1 may pass through the cover 502 and enter the electronic device 1. The camera module 100 collects ambient light entering the electronic device 1.

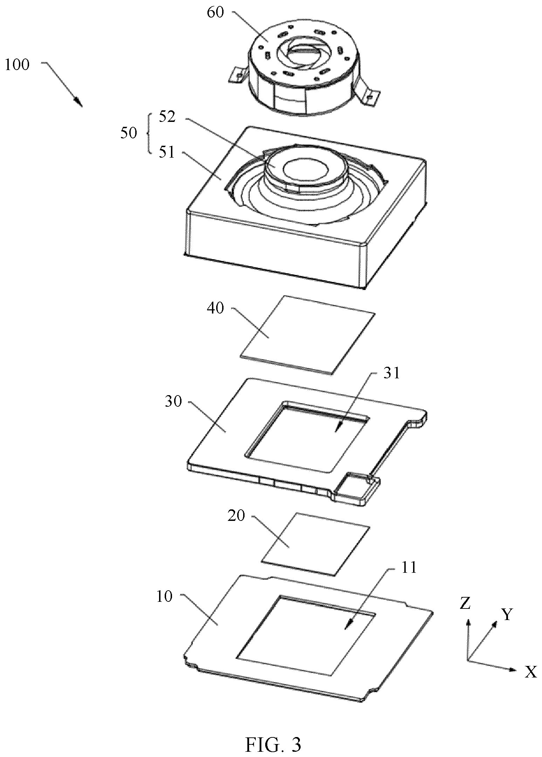

Refer to FIG. 3. FIG. 3 is a partial schematic exploded view of the camera module 100 of the electronic device 1 shown in FIG. 1. The camera module 100 includes a module circuit board 10, a photosensitive chip 20, a support 30, a light filter 40, a lens assembly 50, and a variable aperture 60. The photosensitive chip 20 may also be referred to as an image sensor, or may be referred to as a photosensitive element. The photosensitive chip 20 may be configured to collect the ambient light, and convert image information carried in the ambient light into an electrical signal. It should be noted that an optical axis of the camera module 100 includes an optical axis of the variable aperture 60. In this implementation, both an optical axis direction of the camera module 100 and an optical axis direction of the variable aperture 60 are a Z-axis direction.

In an implementation, the module circuit board 10 may be a rigid circuit board, a flexible circuit board, or a combination of a rigid circuit board and a flexible circuit board. The module circuit board 10 may be an FR-4 dielectric board, a Rogers (Rogers) dielectric board, a hybrid dielectric board of Rogers and FR-4, or the like.

For example, the module circuit board 10 is provided with a sink 11, and the sink 11 forms an opening on a surface of the module circuit board 10.

As shown in FIG. 2, the module circuit board 10 may be fastened to a side that is of the screen 300 and that faces the rear cover 202, and the module circuit board 10 may be electrically connected to the host circuit board 400. In this way, signals may be transmitted between the module circuit board 10 and the host circuit board 400.

In an implementation, the photosensitive chip 20 is fixedly connected to the module circuit board 10, and is located in the sink 11. In this way, the photosensitive chip 20 is disposed in the sink 11, and there is an overlapping area between the photosensitive chip 20 and the module circuit board 10 in the Z-axis direction, thereby preventing the photosensitive chip 20 from increasing a thickness of the camera module 100 in the Z-axis direction because the photosensitive chip is stacked on the module circuit board 10.

In an implementation, the photosensitive chip 20 is further electrically connected to the module circuit board 10. In this way, the photosensitive chip 20 may receive a signal of the host circuit board 400 through the module circuit board 10, and may also send a signal to the host circuit board 400 through the module circuit board 10.

Refer to FIG. 2 again. The support 30 may be fixedly connected to a side that is of the module circuit board 10 and that is away from the screen 300, and the support 30 and the photosensitive chip 20 may be located on a same side of the module circuit board 10. For example, the support 30 may be fastened to the module circuit board 10 by using glue, an adhesive tape, or the like.

Refer to FIG. 2 and FIG. 3. In an implementation, the support 30 may be provided with a light transmission hole 31, and the light transmission hole 31 penetrates two surfaces of the support 30 that are disposed back to back. The light filter 40 is fastened on the support 30, and the light filter 40 is located in the light transmission hole 31. The light filter 40 and the photosensitive chip 20 are disposed opposite to each other. The light filter 40 may be configured to filter out stray light of the ambient light, to ensure that an image shot by the camera module 100 has good definition. The light filter 40 may be but is not limited to a blue glass light filter. For example, the light filter 40 may alternatively be a reflective infrared light filter or a dual-passband light filter (where the dual-passband light filter may allow visible light and infrared light in the ambient light to simultaneously pass through, allow visible light and light of another specified wavelength (for example, ultraviolet light) in the ambient light to simultaneously pass through, or allow infrared light and light of another specified wavelength (for example, ultraviolet light) to simultaneously pass through).

Refer to FIG. 3 again. With reference to FIG. 2, the lens assembly 50 may be a prime lens, an auto focus (Auto Focus, AF) lens, a zoom lens, or the like. The lens assembly 50 in this embodiment is described by using an AF lens as an example. The lens assembly 50 includes a motor 51 and a lens 52, and the lens 52 is disposed in the motor 51. The motor 51 is configured to drive the lens 52 to move along the optical axis direction (namely, the Z-axis direction) of the camera module 100. The motor 51 may be a voice coil motor or a shape memory alloy (shape memory alloy, SMA) motor. A specific structure of the motor 51 is not limited in this application.

In an implementation, the motor 51 is fixedly connected to the support 30, and the lens 52 is located on a side that is of the light filter 40 and that is away from the photosensitive chip 20. In this way, ambient light may be propagated to the photosensitive chip 20 through the lens 52 and the light filter 40.

Refer to FIG. 2 and FIG. 3 again. In an implementation, the variable aperture 60 is located on a light inlet side of the lens 52 of the lens assembly 50, and is fixedly connected to the lens 52 of the lens assembly 50. The variable aperture 60 is further disposed opposite to the cover 502. The variable aperture 60 may be configured to increase or decrease an amount of light entering the lens 52 of the lens assembly 50. For example, when the electronic device 1 performs shooting in a dark light condition, the variable aperture 60 may increase the amount of light entering the lens assembly 50. When the electronic device 1 performs shooting in a sufficient light condition, the variable aperture 60 may decrease the amount of light entering the lens assembly 50.

It may be understood that, when a size of an aperture hole of the variable aperture 60 and a position of the aperture hole of the variable aperture 60 relative to the lens 52 change, a size of a field of view of the lens 52 accordingly changes. In this implementation, the variable aperture 60 is fastened on the lens 52, so that when the motor 51 drives the lens 52 to move along the Z-axis direction, the variable aperture 60 may also move along the Z-axis direction. In other words, in a process in which the lens 52 moves along the Z-axis direction, a position of the variable aperture 60 relative to the lens 52 does not change. In this way, without considering another factor that affects the size of the field of view of the lens 52, when the position of the aperture hole of the variable aperture 60 relative to the lens 52 remains unchanged, the field of view of the lens 52 does not change either.

In another embodiment, the variable aperture 60 may alternatively be fixedly connected to the motor 51. In this way, when the motor 51 drives the lens 52 to move along the Z-axis direction, the variable aperture 60 may not need to move along the Z-axis direction, and the lens 52 may move toward or away from the variable aperture 60.

In another embodiment, when the lens assembly 50 is a prime lens, the lens assembly 50 no longer includes the motor 51. In this case, the variable aperture 60 may be directly and fixedly connected to a light inlet side of the prime lens.

In this implementation, the variable aperture 60 includes an initial state, an intermediate state, and an end state. The intermediate state is any state between the initial state and the end state. When the variable aperture 60 is in the initial state, the aperture hole of the variable aperture 60 is the smallest, and the amount of light entering the lens assembly 50 is the smallest. When the variable aperture 60 is in the end state, the aperture hole of the variable aperture 60 is the largest, and the amount of light entering the lens assembly 50 is the largest. In the following, a structure in which the variable aperture 60 is located when the variable aperture is in the initial state is used as an example for description.

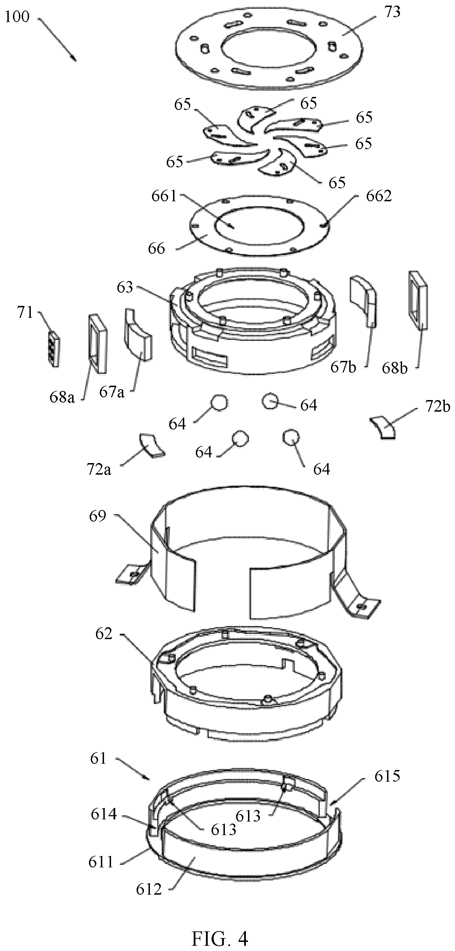

Refer to FIG.4. FIG. 4 is a partial schematic exploded view of the variable aperture 60 of the camera module 100 shown in FIG. 3. The variable aperture 60 includes a base 61, a fixing support 62, a rotating support 63, a plurality of balls 64, a plurality of blades 65, a gasket 66, a first magnet 67a, a second magnet 67b, a first coil 68a, a second coil 68b, a flexible circuit board 69, a drive chip 71, a first magnetic conductive sheet 72a, a second magnetic conductive sheet 72b, and an upper cover 73. It should be noted that, in this embodiment, there are four balls 64, and each ball 64 is of a same shape and size. Therefore, a same label is used for each ball 64. In another embodiment, a quantity of the balls 64 is not limited, and the shape and the size of each ball 64 may also be different.

In another embodiment, the variable aperture 60 may alternatively not include the plurality of balls 64, the gasket 66, the second magnet 67b, the second coil 68b, the flexible circuit board 69, the drive chip 71, the first conductive sheet 72a, the second conductive sheet 72b, and the upper cover 73.

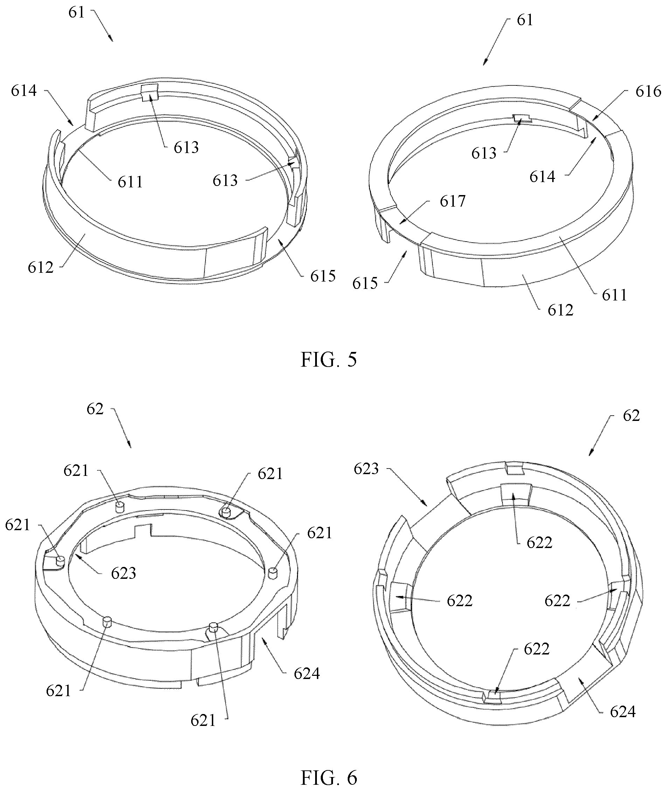

Refer to FIG. 5. With reference to FIG. 4, FIG. 5 is a schematic diagram of a structure of the base 61 shown in FIG. 4 at different angles. In an implementation, the base 61 includes a bottom wall 611 and a side wall 612, and the side wall 612 of the base 61 is fixedly connected to the bottom wall 611 of the base 61. Both the side wall 612 of the base 61 and the bottom wall 611 of the base 61 may be annular. An inner surface of the side wall 612 of the base 61 may be step-shaped. A plurality of first grooves 613 disposed at intervals may be further disposed on the side wall 612 of the base 61. The plurality of first grooves 613 may be arranged in an annular manner, and each first groove 613 forms an opening on the inner surface of the side wall 612 of the base 61. In this implementation, there are four first grooves 613.

In an implementation, the side wall 612 of the base 61 further includes a first notch 614 and a second notch 615 that are disposed at intervals, and the first notch 614 and the second notch 615 may be disposed opposite to each other. Both the first notch 614 and the second notch 615 form openings on an inner peripheral side surface and an outer peripheral side surface of the side wall 612 of the base 61. Both the first notch 614 and the second notch 615 may connect internal space of the base 61 to external space of the base 61.

In an implementation, a first limiting groove 616 and a second limiting groove 617 disposed at intervals are disposed on the bottom wall 611 of the base 61. The first limiting groove 616 and the first notch 614 may be disposed back to back, and the second limiting groove 617 and the second notch 615 may be disposed back to back.

It may be understood that the base 61 may be of a symmetric structure, a partially symmetric structure, or an asymmetric structure. In this implementation, the base 61 is of a symmetric structure. In this way, when the base 61 cooperates with another component, the base 61 is not prone to tilt.

Refer to FIG. 6. FIG. 6 is a schematic diagram of a structure of the fixing support 62 shown in FIG. 4 at different angles. In an implementation, the fixing support 62 may be in a ring shape. A top of the fixing support 62 is provided with a plurality of rotation columns 621 disposed at intervals, and the plurality of rotation columns 621 may be arranged in an annular manner. For example, there are six rotation columns 621.

In an implementation, the fixing support 62 is further provided with a plurality of second grooves 622 disposed at intervals. The plurality of second grooves 622 may be distributed in an annular manner, and each second groove 622 forms an opening on an inner surface of the fixing support 62.

In an implementation, the fixing support 62 is further provided with a third notch 623 and a fourth notch 624 that are disposed at intervals, and the third notch 623 and the fourth notch 624 are disposed opposite to each other. Both the third notch 623 and the fourth notch 624 form openings on an inner peripheral side surface and an outer peripheral side surface of the fixing support 62. Both the third notch 623 and the fourth notch 624 may connect internal space of the fixing support 62 to external space of the fixing support 62.

It may be understood that the fixing support 62 may be of a symmetric structure, a partially symmetric structure, or an asymmetric structure. In this implementation, the fixing support 62 is of a symmetric structure. In this way, when the fixing support 62 cooperates with another component, the fixing support 62 is not prone to tilt due to an unstable gravity center.

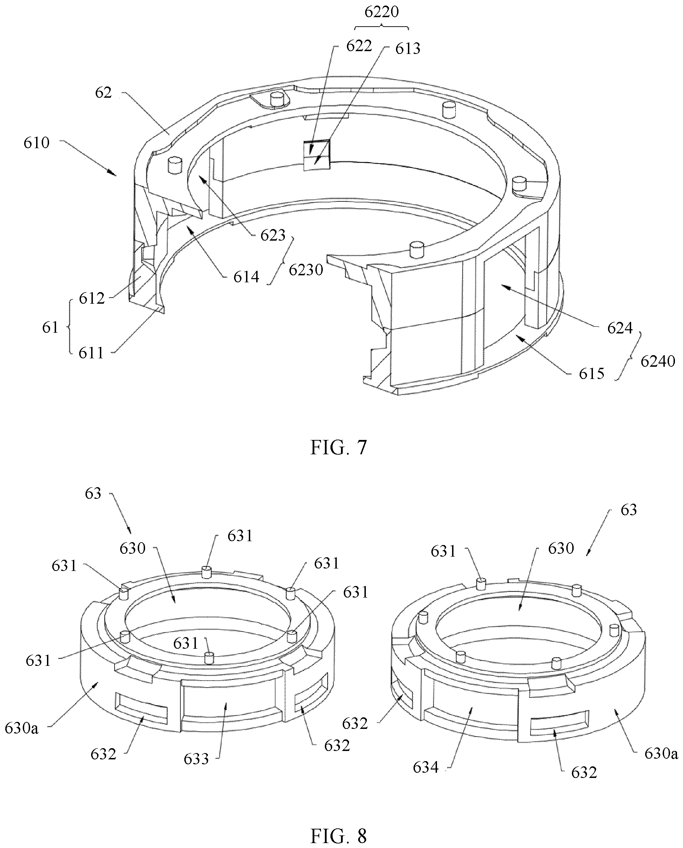

Refer to FIG. 7. With reference to FIG. 5 and FIG. 6, FIG. 7 is a partial schematic cross-sectional view of the variable aperture 60 shown in FIG. 3. In an implementation, the fixing support 62 is fixedly connected to the side wall 612 of the base 61, and the base 61 and the fixing support 62 form a fixing base 610. The plurality of first grooves 613 and the plurality of second grooves 622 are assembled into rotating grooves 6220 in a one-to-one correspondence. In other words, one first groove 613 and one second groove 622 are assembled into one rotating groove 6220. In addition, the first notch 614 and the third notch 623 are assembled into a first through hole 6230, and the second notch 615 and the fourth notch 624 are assembled into a second through hole 6240.

Refer to FIG. 8. FIG. 8 is a schematic diagram of a structure of the rotating support 63 shown in FIG. 4 at different angles. In an implementation, the rotating support 63 may be in a ring shape, and the rotating support 63 encloses space 630. A top of the rotating support 63 is provided with a plurality of guide columns 631 disposed at intervals, and the plurality of guide columns 631 may be arranged in an annular manner. For example, there are six guide columns 631.

For example, the rotating support 63 is further provided with a plurality of rolling grooves 632 disposed at intervals, and the plurality of rolling grooves 632 are distributed in an annular manner. The rolling groove 632 is in a long strip shape. The rolling groove 632 extends along a circumferential direction (namely, a circumferential direction, a direction surrounding an axis of the rotating support 63) of the rotating support 63. In this implementation, there are four rolling grooves 632.

For example, the rotating support 63 is further provided with a first mounting groove 633 and a second mounting groove 634 that are disposed at intervals. The first mounting groove 633 and the second mounting groove 634 are formed by recessing an outer peripheral side surface 630a of the rotating support 63 toward a center of the rotating support 63. The first mounting groove 633 and the second mounting groove 634 are further disposed at intervals with each rolling groove 632. The outer peripheral side surface 630a of the rotating support 63 is connected to a top surface and a bottom surface of the rotating support 63. The outer peripheral side surface 630a of the rotating support 63 may be parallel to the optical axis direction of the variable aperture 60.

It may be understood that the rotating support 63 may be of a symmetric structure, a partially symmetric structure, or an asymmetric structure. In this implementation, the rotating support 63 is of a symmetric structure. In this way, when the rotating support 63 is disposed on the fixing base 610 (refer to FIG. 7), the rotating support 63 is not prone to tilt due to an unstable gravity center.

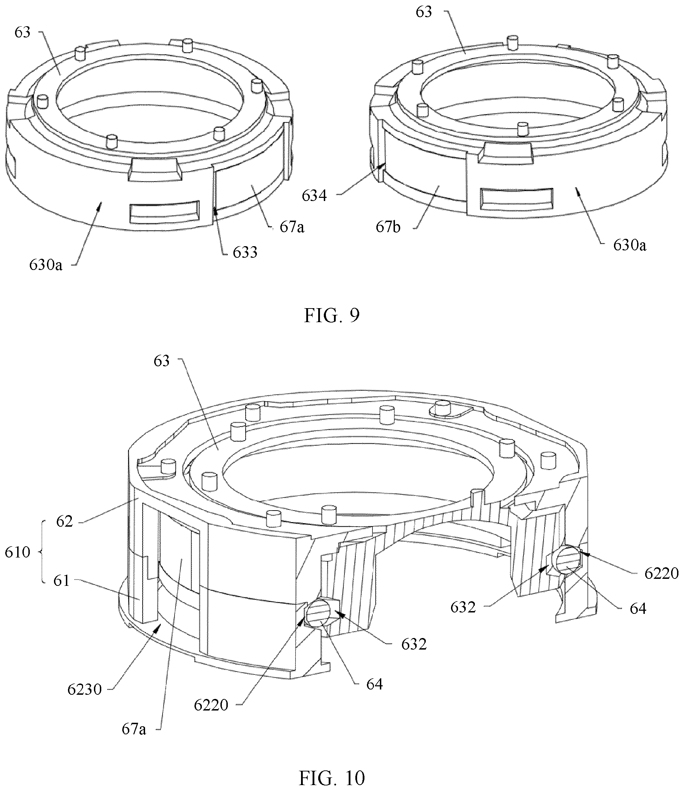

Refer to FIG. 9. With reference to FIG. 8, FIG. 9 is a schematic diagram of a structure of a part of the variable aperture 60 shown in FIG. 3 at different angles. The first magnet 67a may be fixedly connected to the first mounting groove 633 of the rotating support 63 by using adhesive or the like. For example, the first magnet 67a is in an arc shape, and the shape of the first magnet 67a adapts to a shape of the first mounting groove 633. In this way, when the first magnet 67a is fixedly connected to the first mounting groove 633, the first magnet 67a may be embedded in the rotating support 63. On one hand, a structure formed by the first magnet 67a and the rotating support 63 has better integrity. On another hand, the first magnet 67a and the rotating support 63 have overlapping areas in all directions, and the first magnet 67a is not prone to additionally increase a size of the variable aperture 60. In another implementation, the first magnet 67a may be embedded in the rotating support 63 by using an injection molding processing technology.

The second magnet 67b may be fixedly connected to the second mounting groove 634 of the rotating support 63 by using adhesive or the like. For example, the second magnet 67b is in an arc shape, and the shape of the second magnet 67b adapts to a shape of the second mounting groove 634. In this way, when the second magnet 67b is fixedly connected to the second mounting groove 634, the second magnet 67b may be embedded in the rotating support 63. On one hand, a structure formed by the second magnet 67b and the rotating support 63 has better integrity. On another hand, the second magnet 67b and the rotating support 63 have overlapping areas in all directions, and the second magnet 67b is not prone to additionally increase the size of the variable aperture 60. In another implementation, the second magnet 67b may be embedded in the rotating support 63 by using the injection molding processing technology.

For example, the first magnet 67a and the second magnet 67b are center-symmetric with respect to the rotating support 63. In this way, when the first magnet 67a and the second magnet 67b are fixedly connected to the rotating support 63, a structure formed by the first magnet 67a, the second magnet 67b, and the rotating support 63 has better symmetry. In this case, when the first magnet 67a, the second magnet 67b, the rotating support 63 cooperate with another component, the first magnet 67a, the second magnet 67b, and the rotating support 63 are not prone to tilt due to an unstable gravity center.

Refer to FIG. 10. With reference to FIG. 7 and FIG. 8, FIG. 10 is a partial schematic cross-sectional view of the variable aperture 60 shown in FIG. 3. In an implementation, the rotating support 63 is disposed on an inner side of the base 61 and an inner side of the fixing support 62, that is, located on an inner side of the fixing base 610. It may be understood that, the rotating support 63 being located on the inner side of the fixing base 610 includes that a projection of the rotating support 63 on a reference plane at least partially overlaps a projection of the fixing base 610 on the reference plane. The reference plane is parallel to the optical axis direction of the variable aperture 60.

In addition, the rotating support 63 is rotatably connected to the base 61 and the fixing support 62, that is, the rotating support 63 is rotatably connected to the fixing base 610. The plurality of rotating grooves 6220 and the plurality of rolling grooves 632 are disposed opposite to each other in a one-to-one correspondence, and are combined into movable spaces. In other words, one rotating groove 6220 and one rolling groove 632 are disposed opposite to each other, and are combined into one movable space. A part of the ball 64 is disposed in the rotating groove 6220, and another part of the ball 64 is located in the rolling groove 632.

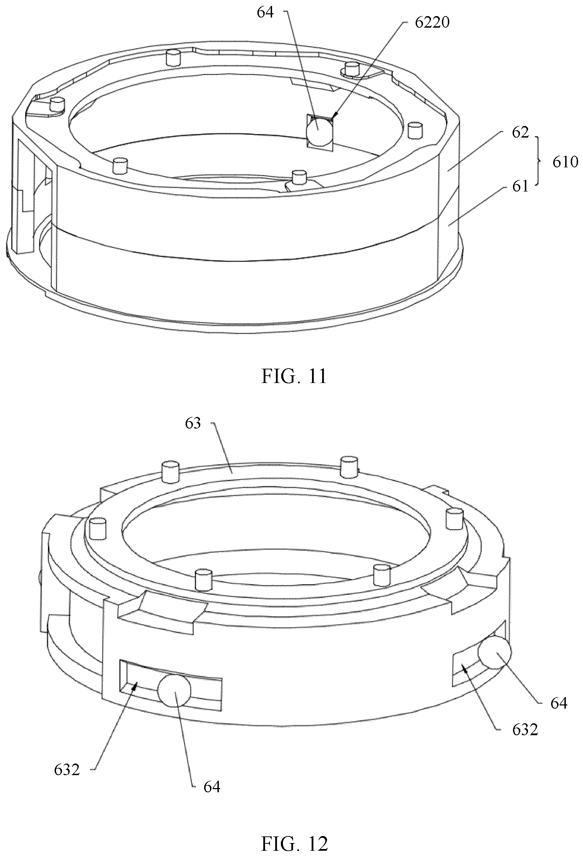

Refer to FIG. 11. With reference to FIG. 10, FIG. 11 is a schematic assembly diagram of the base 61, the fixing support 62, and the ball 64 shown in FIG. 4. Dimensions such as a length and a width of the rotating groove 6220 are set, so that a groove side wall of the rotating groove 6220 can abut against the ball 64 in all directions. In this way, when the rotating support 63 rotates relative to the fixing base 610, the groove side wall of the rotating groove 6220 may restrict, in all directions, rolling of the ball 64 relative to the rotating groove 6220, so that the ball 64 can rotate in the rotating groove 6220.

In an implementation, lubricating oil is disposed between the ball 64 and the rotating groove 6220, and the lubricating oil may reduce friction between the ball 64 and the rotating groove 6220.

Refer to FIG. 12. With reference to FIG. 10, FIG. 12 is a schematic assembly diagram of the rotating support 63 and the ball 64 shown in FIG. 4. Dimensions such as a length and a width of the rolling groove 632 are set. On one hand, a side wall of the rolling groove 632 in a width direction can abut against the ball 64. In this way, when the rotating support 63 rotates relative to the fixing base 610, the side wall of the rolling groove 632 in the width direction may restrict the ball 64 to roll along the width direction of the rolling groove 632. On another hand, the side wall of the rolling groove 632 in a length direction does not abut against the ball 64. In this way, when the rotating support 63 rotates relative to the fixing base 610, the ball 64 may roll along the length direction of the rolling groove 632.

In an implementation, lubricating oil may also be disposed between the ball 64 and the rolling groove 632, and friction between the ball 64 and the rolling groove 632 is reduced by using the lubricating oil.

Refer to FIG. 10 again. In an implementation, the first magnet 67a fastened to the rotating support 63 is disposed opposite to the first through hole 6230. In this case, the first magnet 67a may be exposed relative to the base 61 and the fixing support 62 through the first through hole 6230.

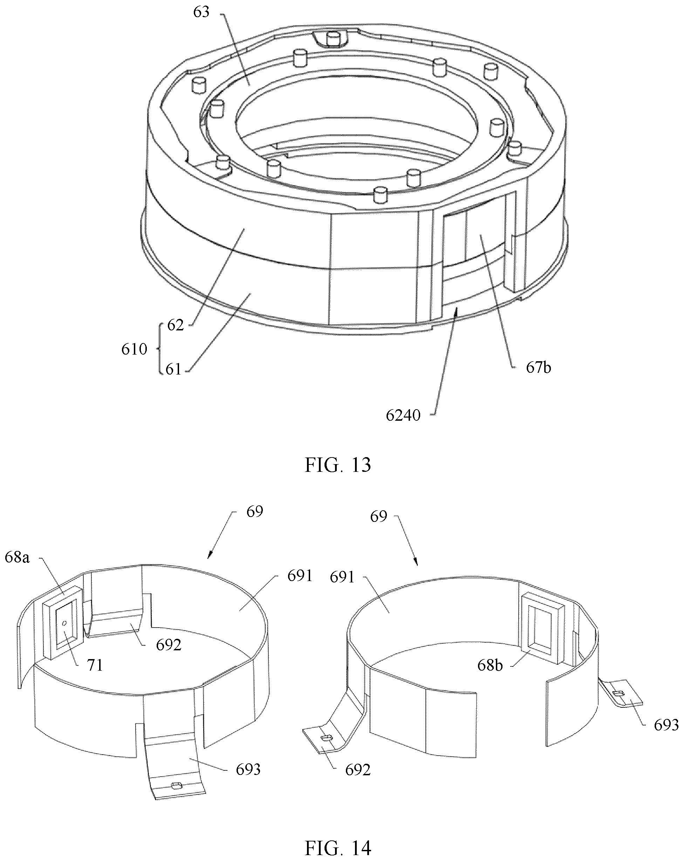

Refer to FIG. 13. FIG. 13 is a schematic diagram of a partial structure of the variable aperture 60 shown in FIG. 3. In an implementation, the second magnet 67b fastened to the rotating support 63 is disposed opposite to the second through hole 6240. In this case, the second magnet 67b may be exposed relative to the base 61 and the fixing support 62 through the second through hole 6240.

Refer to FIG. 14. FIG. 14 is a schematic assembly diagram of the flexible circuit board 69, the first coil 68a, the second coil 68b, and the drive chip 71 shown in FIG. 4 at different angles. In an implementation, the flexible circuit board 69 includes a main part 691, a first extending part 692, and a second extending part 693. The main part 691 may be in a ring shape. The first extending part 692 and the second extending part 693 are respectively connected to two sides of the main part 691.

In an implementation, the first coil 68a is fixedly connected to the main part 691 of the flexible circuit board 69, and is located on an inner peripheral side surface of the main part 691. The first coil 68a is further electrically connected to the main part 691 of the flexible circuit board 69. The second coil 68b is fixedly connected to the main part 691 of the flexible circuit board 69, and is located on the inner peripheral side surface of the main part 691. The second coil 68b is further electrically connected to the main part 691 of the flexible circuit board 69. For example, a part that is of the main part 691 and that is fixedly connected to the first coil 68a may be disposed in a planar shape, so that the first coil 68a is fixedly connected to the main part 691. In addition, a part that is of the main part 691 and that is fixedly connected to the second coil 68b may be disposed in a planar shape, so that the second coil 68b is fixedly connected to the main part 691.

In an implementation, the drive chip 71 may be fixedly connected to the main part 691 of the flexible circuit board 69 through welding or the like. The drive chip 71 is further electrically connected to the first coil 68a and the second coil 68b, and the drive chip 71 is configured to supply power to the first coil 68a and the second coil 68b. In this implementation, the drive chip 71 is electrically connected to the flexible circuit board 69, and is electrically connected to the first coil 68a and the second coil 68b through the flexible circuit board 69.

For example, the drive chip 71 may be located on the inner peripheral side surface of the main part 691 of the flexible circuit board 69, and located in a region enclosed by the first coil 68a. In this way, arrangement of the drive chip 71 and the first coil 68a on the flexible circuit board 69 is more compact, thereby facilitating miniaturization of the variable aperture 60.

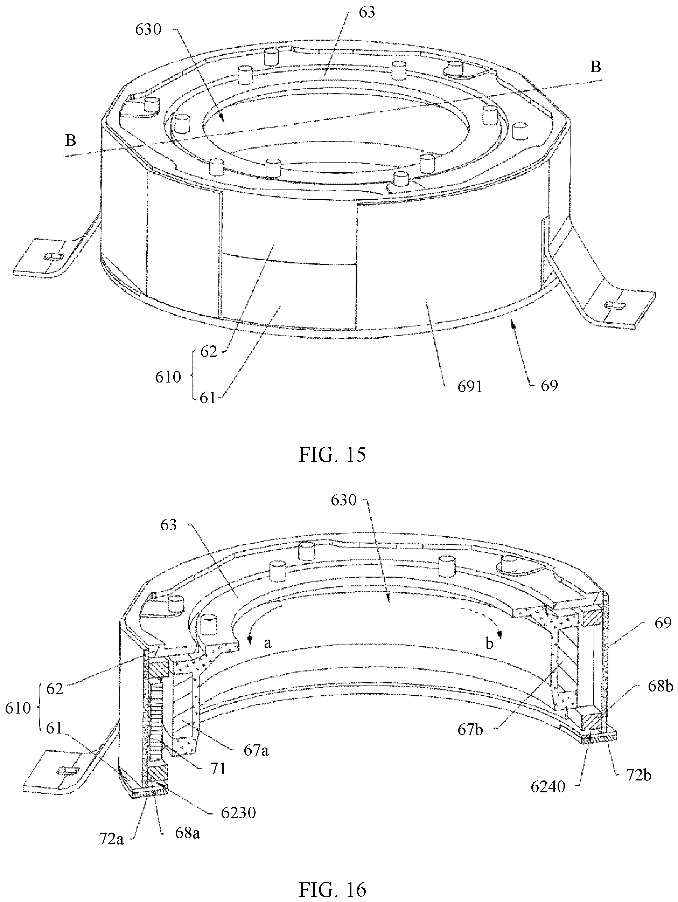

Refer to FIG. 15. With reference to FIG. 14, FIG. 15 is a schematic diagram of a partial structure of the variable aperture 60 shown in FIG. 3. In an implementation, the main part 691 of the flexible circuit board 69 surrounds an outer peripheral side surface of the fixing base 610. The main part 691 of the flexible circuit board 69 may be fixedly connected to the outer peripheral side surface of the fixing base 610 through bonding or the like. In this way, arrangement between the main part 691 of the flexible circuit board 69 and the fixing base 610 is compact. The main part 691 of the flexible circuit board 69 occupies small space, thereby facilitating miniaturization of the variable aperture 60.

In an implementation, the first extending part 692 and the second extending part 693 of the flexible circuit board 69 are configured to electrically connect to an external component of the variable aperture 60. For example, the first extending part 692 and the second extending part 693 of the flexible circuit board 69 may be electrically connected to the module circuit board 10 (refer to FIG. 3) by using cables in some components (for example, the motor or the support of the lens assembly) of the camera module 100. In this way, the drive chip 71 may be electrically connected to the module circuit board 10 through the flexible circuit board 69. In other words, the module circuit board 10 may transmit an electrical signal to the drive chip 71 through the flexible circuit board 69.

Refer to FIG. 16. FIG. 16 is a schematic cross-sectional view of a part of the variable aperture 60 shown in FIG. 15 at a line B-B. The first coil 68a is disposed facing the first magnet 67a, and the second coil 68b is disposed facing the second magnet 67b. It should be understood that, that the first coil 68a faces the first magnet 67a may be that a plane on which the first coil 68a is located and the first magnet 67a are disposed face to face. In this implementation, both the plane on which the first coil 68a is located and a plane on which the first magnet 67a is located are parallel to the optical axis direction of the variable aperture 60. The plane on which the first coil 68a is located may be perpendicular to an axis of a winding wire of the first coil 68a. That the second coil 68b faces the second magnet 67b may be that a plane on which the second coil 68b is located and the second magnet 67b are disposed face to face. In this implementation, both the plane on which the second coil 68b is located and a plane on which the second magnet 67b is located are parallel to the optical axis direction of the variable aperture 60. The plane on which the second coil 68b is located may be perpendicular to an axis of a winding wire of the second coil 68b.

In this implementation, the first coil 68a is located in the first through hole 6230, and the second coil 68b is located in the second through hole 6240. In this way, the first coil 68a and the second coil 68b have overlapping areas with the fixing base 610 in all directions. In this way, the first coil 68a and the second coil 68b may use space in which the fixing base 610 is located, and the first coil 68a and the second coil 68b do not additionally increase the size of the variable aperture 60, thereby facilitating miniaturization of the variable aperture 60.

In another implementation, the first coil 68a may alternatively be located outside the first through hole 6230, and the second coil 68b may alternatively be located outside the second through hole 6240.

In another implementation, positions of the first magnet 67a and the first coil 68a may be exchanged, and positions of the second magnet 67b and the second coil 68b may also be exchanged.

In this implementation, when the drive chip 71 receives a signal, the drive chip 71 may transmit a current signal to the first coil 68a and the second coil 68b through the flexible circuit board 69. When the first coil 68a has a current signal, the first coil 68a and the first magnet 67a may generate forces interacting with each other. In this way, when the first magnet 67a is subject to an acting force, the first magnet 67a may drive the rotating support 63 to rotate relative to the base 61 and the fixing support 62. In addition, when the second coil 68b has a current signal, the second coil 68b and the second magnet 67b may generate forces interacting with each other. In this way, when the second magnet 67b is subject to an acting force, the second magnet 67b may drive the rotating support 63 to rotate relative to the fixing support 62 and the base 61.

It may be understood that a direction of the force applied to the first magnet 67a is changed by changing a magnetic position of the first magnet 67a (namely, positions of the south pole and the north pole of the first magnet 67a) or a direction of the current signal on the first coil 68a, so as to change a rotation direction of the rotating support 63. In addition, a direction of the force applied to the second magnet 67b may also be changed by changing a magnetic position of the second magnet 67b (namely, positions of the south pole and the north pole of the second magnet 67b) or a direction of the current signal on the second coil 68b, so as to change a rotation direction of the rotating support 63. In this implementation, a direction in which the first magnet 67a drives the rotating support 63 to rotate relative to the fixing support 62 and the base 61 is the same as a direction in which the second magnet 67b drives the rotating support 63 to rotate relative to the fixing support 62 and the base 61. In this case, the first magnet 67a and the second magnet 67b may jointly drive the rotating support 63 to rotate relative to the fixing support 62 and the base 61 in a first direction a (where the direction is indicated by a solid line with an arrow in FIG. 16), or in a second direction b (where the direction is indicated by a dashed line with an arrow in FIG. 16).

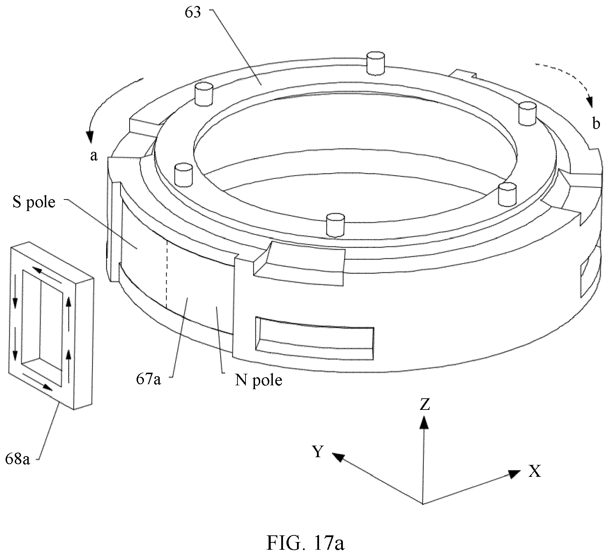

Refer to FIG. 17a. FIG. 17a is a schematic diagram of a structure of an implementation in which the first coil 68a and the first magnet 67a drive the rotating support 63 to rotate. A direction of a current on the first coil 68a is an anticlockwise direction on a Y-Z plane, and is represented by a solid line with an arrow in FIG. 17a. The first magnet 67a includes the south pole (S pole) and the north pole (N pole). A polarization direction of the first magnet 67a in this implementation (namely, a direction in which the south pole of the first magnet 67a points to the north pole of the first magnet 67a, or a direction in which the north pole of the first magnet 67a points to the south pole of the first magnet 67a) may be a Y-axis direction. For example, the direction in which the south pole of the first magnet 67a faces the north pole of the first magnet 67a may be disposed in parallel to the circumferential direction of the rotating support 63. In this case, the first magnet 67a may be subject to an ampere force along a negative direction of the Y axis, and the first magnet 67a may drive the rotating support 63 to rotate along the first direction a. It may be understood that the direction of the current on the first coil 68a may be changed (for example, the anticlockwise direction is changed to a clockwise direction), or arrangement positions of the south pole and the north pole of the first magnet 67a may be changed, so that the first magnet 67a can drive the rotating support 63 to rotate along the second direction b.

In an implementation, when the first magnet 67a and the second magnet 67b jointly drive the rotating support 63 to rotate, because the first magnet 67a and the second magnet 67b are center-symmetric with respect to the rotating support 63, acting forces of the first magnet 67a and the second magnet 67b on each position of the rotating support 63 are accordingly balanced. In this way, the rotating support 63 is not prone to tilt due to force unbalance.

Refer to FIG. 16 again. The drive chip 71 may be further configured to detect magnetic field strength of the first magnet 67a. It may be understood that, when the rotating support 63 rotates relative to the base 61 and the fixing support 62, the first magnet 67a also rotates with the rotating support 63 relative to the base 61 and the fixing support 62. In this case, the first magnet 67a is located in different positions relative to the base 61 and the fixing support 62. The drive chip 71 may be configured to detect magnetic field strength of the first magnet 67a in different positions. In this way, an angle at which the rotating support 63 rotates relative to the base 61 and the fixing support 62 may be determined by using the magnetic field strength detected by the drive chip 71, to accurately determine a state of the variable aperture 60, and further accurately control the amount of light entering the variable aperture 60.

In another implementation, the drive chip 71 may alternatively be disposed in a position opposite to the second magnet 67b. The drive chip 71 is configured to detect magnetic field strength of the second magnet 67b in different positions.

In another implementation, the drive chip 71 may not have a function of detecting the magnetic field strength of the first magnet 67a. The variable aperture 60 may detect, by other means, the magnetic field strength of the first magnet 67a in different positions. For example, the variable aperture 60 may include a position sensor (for example, a Hall effect sensor). When the position sensor is located around the first magnet 67a, the position sensor may detect the magnetic field strength of the first magnet 67a in different positions. When the position sensor is located around the second magnet 67b, the position sensor may detect the magnetic field strength of the second magnet 67b in different positions. When there are two position sensors, and one is located around the first magnet 67a and the other is located around the second magnet 67b, one position sensor may detect the magnetic field strength of the first magnet 67a in different positions, and the other position sensor may detect the magnetic field strength of the second magnet 67b in different positions.

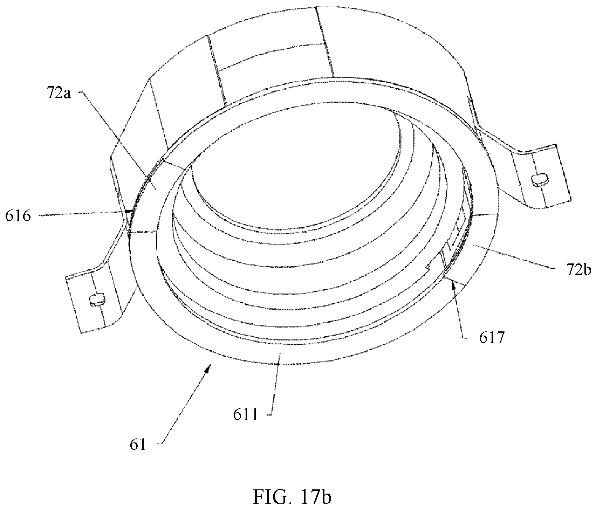

Refer to FIG. 17b. With reference to FIG. 4, FIG. 17b is a schematic diagram of a partial structure of the variable aperture 60 shown in FIG. 3. The first magnetic conductive sheet 72a may be fixedly connected to the first limiting groove 616 of the bottom wall 611 of the base 61 in a manner such as bonding. The second magnetic conductive sheet 72b is fixedly connected to the second limiting groove 617 of the bottom wall 611 of the base 61. For example, a shape of the first magnetic conductive sheet 72a is an arc shape, and the shape of the first magnetic conductive sheet 72a adapts to a shape of the first limiting groove 616. In this way, when the first magnetic conductive sheet 72a is fixedly connected to the first limiting groove 616, the first magnetic conductive sheet 72a may better cooperate with the first limiting groove 616, and the first magnetic conductive sheet 72a and the base 61 may form a better overall structure, without significantly increasing the size of the variable aperture 60 due to occupation of additional space. It should be understood that for a disposing manner of the second magnetic conductive sheet 72b, refer to a disposing manner of the first magnetic conductive sheet 72a. Details are not described herein again.

In another implementation, the first magnetic conductive sheet 72a may alternatively be fixedly connected to the base 61 by using an insert molding (insert molding) process.

With reference to FIG. 16, the first magnetic conductive sheet 72a is located on a side that is of the bottom wall 611 of the base 61 and that is away from the first coil 68a. In other words, the first magnetic conductive sheet 72a and the first coil 68a are disposed back to back. The first magnetic conductive sheet 72a is located around the first magnet 67a, and a magnetic force may be generated between the first magnetic conductive sheet 72a and the first magnet 67a. The second magnetic conductive sheet 72b is located on a side that is of the bottom wall of the base 61 and that is away from the second coil 68b. The second magnetic conductive sheet 72b is located around the second magnet 67b, and a magnetic force may be generated between the second magnetic conductive sheet 72b and the second magnet 67b. In this way, the first magnetic conductive sheet 72a cooperates with the first magnet 67a, and the second magnetic conductive sheet 72b cooperates with the second magnet 67b, so that connections between the rotating support 63 and the base 61 and between the rotating support 63 and the fixing support 62 are more stable. In other words, stability of the rotating support 63 is better. In this way, when the rotating support 63 rotates relative to the base 61 and the fixing support 62, the rotating support 63 is not prone to tilt or shake in a rotating process.

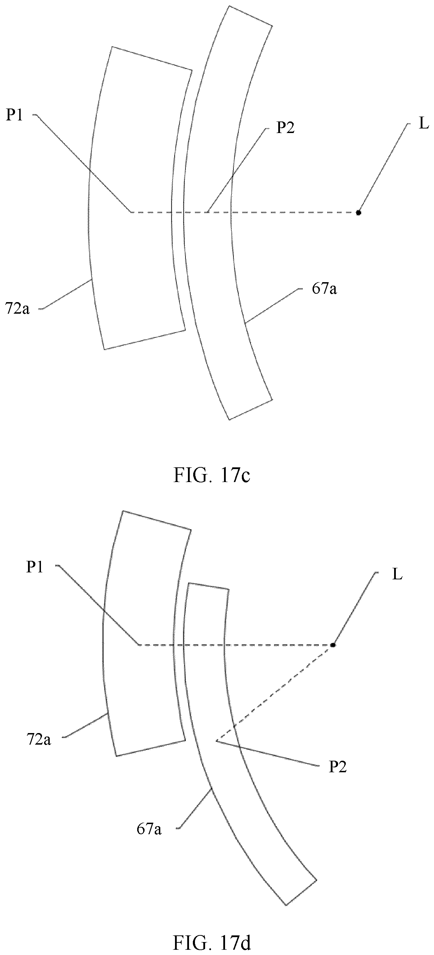

Refer to FIG. 17c and 17d. FIG. 17c is a top view when the first magnetic conductive sheet 72a and the first magnet 67a shown in FIG. 16 are in a first position. FIG. 17d is a top view when the first magnetic conductive sheet 72a and the first magnet 67a shown in FIG. 16 are in a second position. In this implementation, FIG. 17c and FIG. 17d may be any two positions in which the variable aperture 60 is in the intermediate state. In another implementation, FIG. 17c and FIG. 17d may alternatively be a position of the initial state and a position of the end state of the variable aperture 60 respectively.

In this implementation, the first magnetic conductive sheet 72a and the first magnet 67a each are in an arc shape. An arc length of the first magnetic conductive sheet 72a may be less than an arc length of the first magnet 67a. In another implementation, when the first magnetic conductive sheet 72a and the first magnet 67a each are in another shape, a length of the first magnetic conductive sheet 72a may be less than a length of the first magnet 67a.

Refer to FIG. 17c. With reference to FIG. 16, when the first magnetic conductive sheet 72a and the first magnet 67a are in the first position, a perpendicular straight line between a center P1 of the first magnetic conductive sheet 72a and a center axis L of the rotating support 63 overlaps a perpendicular straight line between a center P2 of the first magnet 67a and the center axis L of the rotating support 63. It should be noted that the center axis L of the rotating support 63 is a point in a top view angle, and therefore is indicated by a black point in FIG. 17c.

Refer to FIG. 17d. With reference to FIG. 16, when the first magnetic conductive sheet 72a and the first magnet 67a are in the second position, the perpendicular straight line between the center P1 of the first magnetic conductive sheet 72a and the center axis L of the rotating support 63 and the perpendicular straight line between the center P2 of the first magnet 67a and the center axis L of the rotating support 63 are disposed in a staggered manner. It may be understood that, when the first coil 68a is not powered on, a magnetic force between the first magnetic conductive sheet 72a and the first magnet 67a may enable the first magnet 67a to drive the rotating support 63 to rotate, so that the perpendicular straight line between the center P1 of the first magnetic conductive sheet 72a and the center axis L of the rotating support 63 overlaps the perpendicular straight line between the center P2 of the first magnet 67a and the center axis L of the rotating support 63. In this way, the first magnetic conductive sheet 72a and the first magnet 67a may be restored from the second position to the first position.

In this implementation, for a manner of disposing the second magnetic conductive sheet 72b and the second magnet 67b, refer to a manner of disposing the first magnetic conductive sheet 72a and the first magnet 67a. Details are not described again.

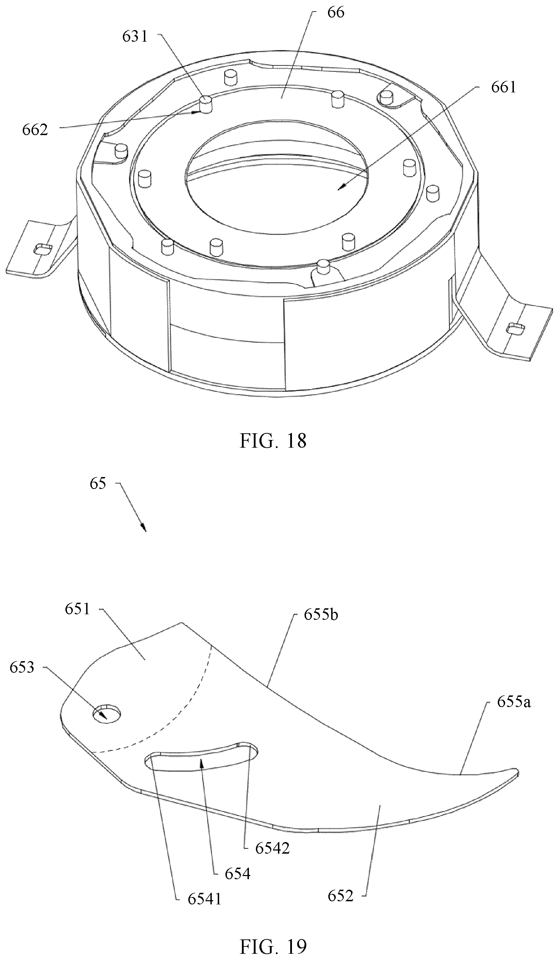

Refer to FIG. 18. With reference to FIG. 4, FIG. 18 is a schematic diagram of a partial structure of the variable aperture 60 shown in FIG. 3. In an implementation, the gasket 66 may be in a ring shape. The gasket 66 has a light transmission hole 661, and the light transmission hole 661 of the gasket 66 is connected to the space 630 (refer to FIG. 16) of the rotating support 63 (refer to FIG. 16). An aperture of the light transmission hole 661 of the gasket 66 remains unchanged. The light transmission hole 661 of the gasket 66 may be used as a gear of the aperture hole of the variable aperture 60, and detailed descriptions is provided in the following with reference to related accompanying drawings. Details are not described herein again.

For example, the gasket 66 is provided with a plurality of fixing holes 662 disposed at intervals. For example, a quantity of the fixing holes 662 is equal to a quantity of the guide columns 631 of the rotating support 63 (refer to FIG. 15). In other words, there are six fixing holes 662. In addition, the plurality of fixing holes 662 are located around the light transmission hole 661 of the gasket 66, and surround the light transmission hole 661 of the gasket 66.

Refer to FIG. 18. With reference to FIG. 16, in an implementation, the gasket 66 is fixedly connected to the top of the rotating support 63. For example, the plurality of guide columns 631 of the rotating support 63 pass through the plurality of fixing holes 662 of the gasket 66 in a one-to-one correspondence. In other words, one guide column 631 passes through one fixing hole 662. It may be understood that, through cooperation between the fixing holes 662 of the gasket 66 and the guide columns 631 of the rotating support 63, the gasket 66 is not prone to shake on the X-Y plane.

In an implementation, a center axis of the light transmission hole 661 of the gasket 66 overlaps the center axis of the rotating support 63. The center axis of the light transmission hole 661 of the gasket 66 refers to a virtual axis that passes through a center of the light transmission hole 661 of the gasket 66 and is perpendicular to a plane on which the gasket 66 is located. In another embodiment, the center axis of the light transmission hole 661 of the gasket 66 may alternatively not overlap the center axis of the rotating support 63.

Refer to FIG. 19. FIG. 19 is a schematic diagram of a structure of an implementation of the blade 65 shown in FIG. 4 at a different angle. In this embodiment, the structure of the blade 65 is specifically described by using one of the blades 65 as an example. In an implementation, the blade 65 includes a first portion 651 and a second portion 652 connected to the first portion 651. The first portion 651 of the blade 65 is mainly configured to be connected to the fixing support 62, and the second portion 652 of the blade 65 is mainly configured to be connected to the rotating support 63. It should be understood that, for ease of describing a specific structure of the blade 65, the first portion 651 of the blade 65 and the second portion 652 of the blade 65 are schematically divided by using dashed lines in FIG. 18, but this does not affect an integrated structure of the blade 65.

For example, the first portion 651 of the blade 65 is provided with a rotation hole 653. For example, the rotation hole 653 may be a round hole.

For example, the second portion 652 of the blade 65 is provided with a guide hole 654. For example, the guide hole 654 may be an arc hole. The guide hole 654 includes a first end wall 6541 and a second end wall 6542 that are disposed opposite to each other. The first end wall 6541 is disposed close to the rotation hole 653 relative to the second end wall 6542.

In an implementation, an inner edge of the blade 65 is roughly "sickle"-shaped. The inner edge of the blade 65 includes a first segment 655a and a second segment 655b that are sequentially connected. The first segment 655a may be in an arc shape, and the second segment 655b may be in an arc shape or a straight-line shape. When the second segment 655b is in an arc shape, a curvature radius of the second segment 655b is less than a curvature radius of the first segment 655a. The second segment 655b in this embodiment is described by using an arc shape as an example.

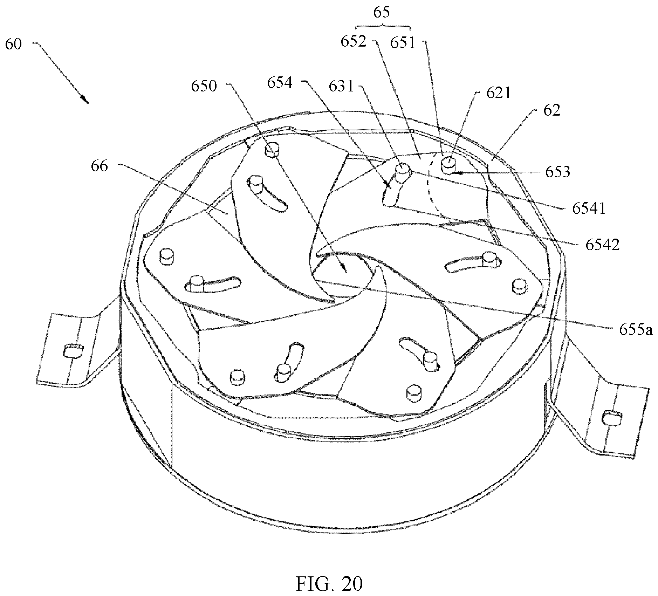

Refer to FIG. 20. With reference to FIG. 18, FIG. 20 is a schematic diagram of a partial structure of the variable aperture 60 shown in FIG. 3. In this embodiment, one of the blades 65 is used as an example to specifically describe a connection relationship between the blade 65 and the fixing support 62 and a connection relationship between the blade 65 and the rotating support 63. The first portion 651 of the blade 65 is rotatably connected to the fixing support 62. For example, the plurality of rotation columns 621 of the fixing support 62 pass through rotation holes 653 of the plurality of blades 65 in a one-to-one correspondence. In other words, one rotation column 621 of the fixing support 62 passes through a rotation hole 653 of one blade 65. It may be understood that a hole wall of the rotation hole 653 may rotate relative to the rotation column 621. In this way, through cooperation between the rotation hole 653 and the rotation column 621, the blade 65 can rotate relative to the fixing support 62 by using the rotation column 621 as a rotating shaft.

In another embodiment, positions of the rotation column 621 and the rotation hole 653 may be exchanged. The rotation column 621 is disposed on the blade 65, and the rotation hole 653 is disposed on the rotating support 63.

In addition, the second portion 652 of the blade 65 is slidably connected to the rotating support 63 (refer to FIG. 16). For example, the plurality of guide columns 631 of the rotating support 63 pass through guide holes 654 of the plurality of blades 65 in a one-to-one correspondence. In other words, one guide column 631 of the rotating support 63 passes through a guide hole 654 of one blade 65. It may be understood that the guide column 631 may slide relative to a hole wall of the guide hole 654. In this way, through cooperation between the guide hole 654 and the guide column 631, the blade 65 may be slidably connected to the rotating support 63.

In another embodiment, positions of the guide column 631 and the guide hole 654 may be exchanged. In other words, the guide column 631 may be disposed on the blade 65, and the guide hole 654 may be disposed on the rotating support 63.

Refer to FIG. 20 again. With reference to FIG. 19, the plurality of blades 65 are distributed in an annular manner, and jointly enclose a light transmission hole 650. For example, inner edges of the plurality of blades 65 jointly enclose the light transmission hole 650, and the light transmission hole 650 is in communication with the light transmission hole 661 (refer to FIG. 18) of the gasket 66. The plurality of blades 65 are located at a top of the gasket 66. It may be understood that, because the first portion 651 of each blade 65 is rotatably connected to the fixing support 62, and the second portion 652 of each blade 65 is slidably connected to the rotating support 63, when the plurality of blades 65 open or close, an aperture of the light transmission hole 650 of the plurality of blades 65 may increase or decrease, and a shape of the light transmission hole 650 of the plurality of blades 65 changes. Certainly, in another implementation, a shape of the inner edge of each blade 65 may be changed, so that when the plurality of blades 65 open or close, the shape of the light transmission hole 650 of the plurality of blades 65 does not change.

In an implementation, a center axis of the light transmission hole 650 of the plurality of blades 65 overlaps the center axis of the rotating support 63. The center axis of the light transmission hole 650 of the plurality of blades 65 refers to a virtual axis that passes through a center of the light transmission hole 650 of the plurality of blades 65 and is perpendicular to a plane on which the plurality of blades 65 are located. In another embodiment, the center axis of the light transmission hole 650 of the plurality of blades 65 may alternatively not overlap the center axis of the rotating support 63.

The foregoing specifically describes the connection relationship between the blade 65 and the fixing support 62 and the connection relationship between the blade 65 and the rotating support 63. The following specifically describes a relationship between motion of the blade 65 and a size of the light transmission hole 650 of the plurality of blades 65. In this embodiment, the structure of the blade 65 is specifically described by using one of the blades 65 as an example.

Refer to FIG. 20 again. When the variable aperture 60 is in the initial state, the guide column 631 of the rotating support 63 is disposed close to the first end wall 6541 of the guide hole 654. A maximum aperture of the light transmission hole 650 of the plurality of blades 65 is a first aperture d1. In this implementation, a value of the first aperture d1 may be 1.44 millimeters. It should be understood that, because the value of the first aperture d1 is small, an amount of light passing through the light transmission hole 650 is small.

For example, when the variable aperture 60 is in the initial state, the shape of the light transmission hole 650 of the plurality of blades 65 is a polygon. The light transmission hole 650 of the plurality of blades 65 is formed by a partial arc of the first segment 655a of each blade 65. In this implementation, the shape of the light transmission hole 650 of the plurality of blades 65 is a regular polygon.

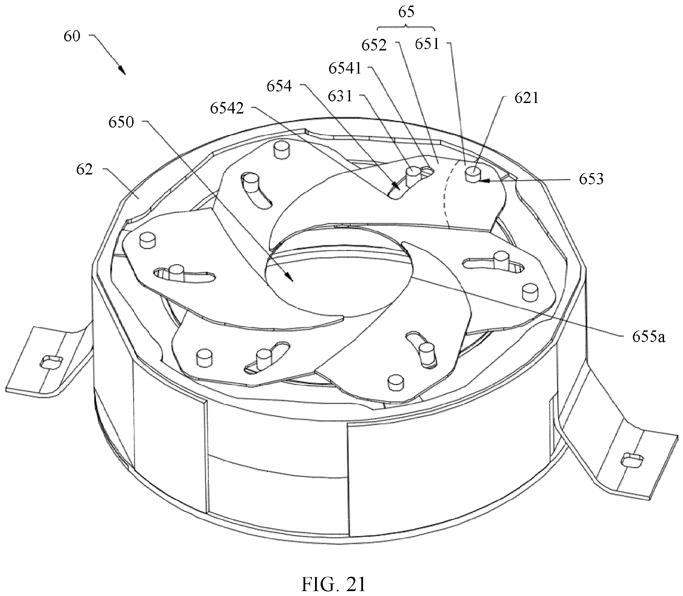

Refer to FIG. 21. FIG. 21 is a schematic diagram of a structure of a part of the variable aperture 60 shown in FIG. 20 in an intermediate state. When the variable aperture 60 is in a first intermediate state, the guide column 631 of the rotating support 63 (refer to FIG. 16) is located between the first end wall 6541 of the guide hole 654 and the second end wall 6542 of the guide hole 654. The maximum aperture of the light transmission hole 650 of the plurality of blades 65 is a second aperture d2, and the second aperture d2 is greater than the first aperture d1. In this implementation, a value of the second aperture d2 may be 2.05 millimeters.

For example, when the variable aperture 60 is in the first intermediate state, the shape of the light transmission hole 650 of the plurality of blades 65 is a circle, and the light transmission hole 650 of the plurality of blades 65 is formed by the entire arc of the first segment 655a of each blade 65.

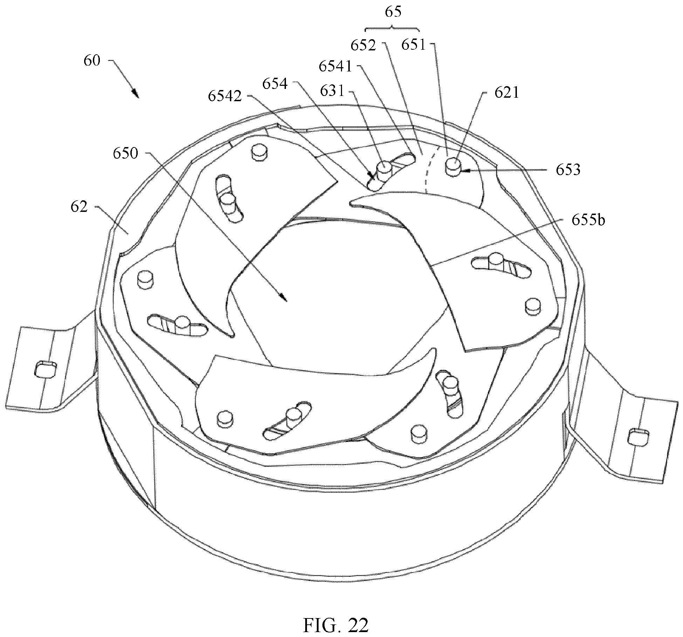

Refer to FIG. 22. FIG. 22 is a schematic diagram of a structure of a part of the variable aperture 60 shown in FIG. 20 in another intermediate state. When the variable aperture 60 is in a second intermediate state, the guide column 631 of the rotating support 63 is located between the first end wall 6541 of the guide hole 654 and the second end wall 6542 of the guide hole 654. The maximum aperture of the light transmission hole 650 of the plurality of blades 65 is a third aperture d3, and the second aperture d3 is greater than the first aperture d2. In this implementation, a value of the second aperture d3 may be 2.9 millimeters.

For example, when the variable aperture 60 is in the second intermediate state, the shape of the light transmission hole 650 of the plurality of blades 65 is a polygon, and the light transmission hole 650 of the plurality of blades 65 is formed by a part of the second segment 655b of each blade 65. In this implementation, the shape of the light transmission hole 650 of the plurality of blades 65 is a regular polygon.

It may be understood that, when the variable aperture 60 is in the initial state or the intermediate state, the maximum aperture of the light transmission hole 650 of the plurality of blades 65 is less than the aperture of the light transmission hole 661 of the gasket 66. In this case, the light transmission hole 650 of the plurality of blades 65 forms the aperture hole of the variable aperture 60. In other words, the light transmission hole 650 of the plurality of blades 65 may control a luminous flux of the ambient light.

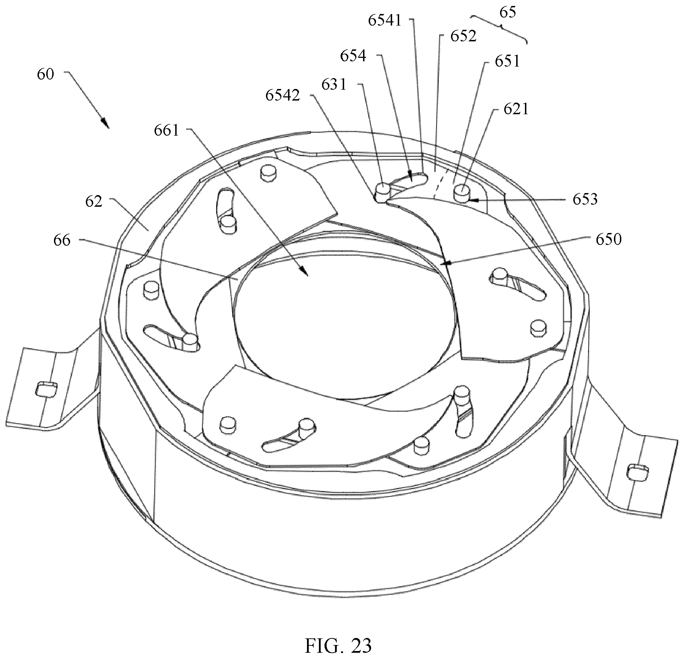

Refer to FIG. 23. FIG. 23 is a schematic diagram of a structure of a part of the variable aperture 60 shown in FIG. 20 in the end state. When the variable aperture 60 is in the end state, the guide column 631 of the rotating support 63 is disposed close to the second end wall 6542 of the guide hole 654, and the aperture of the light transmission hole 650 of the plurality of blades 65 continues to increase. In this case, the light transmission hole 661 of the gasket 66 is exposed relative to each blade 65, and a minimum aperture of the light transmission hole 650 of the plurality of blades 65 is greater than or equal to the aperture of the light transmission hole 661 of the gasket 66. In this case, the light transmission hole 661 of the gasket 66 forms the aperture hole of the variable aperture 60. In this implementation, the aperture of the light transmission hole 661 of the gasket 66 may be 4.42 millimeters.

For example, when the variable aperture 60 is in the end state, a shape of the aperture hole of the variable aperture 60 is a circle.

The following describes a motion process of the blade 65 in detail below with reference to FIG. 20 and FIG. 23. In this embodiment, motion of one of the blades 65 is used as an example for description.

Refer to FIG. 20 and FIG. 21 again. When the variable aperture 60 switches from the initial state to the first intermediate state, the rotating support 63 rotates relative to the fixing support 62, and the guide column 631 of the rotating support 63 may drive the blade 65 to rotate by using the rotation column 621 of the fixing support 62 as a rotating shaft. The guide column 631 switches from a state of being close to the first end wall 6541 of the guide hole 654 to a state of being close to the second end wall 6542 of the guide hole 654. The aperture of the light transmission hole 650 of the plurality of blades 65 increases. For example, the shape of the light transmission hole 650 of the plurality of blades 65 changes from a regular polygon to a circle.

Refer to FIG. 21 and FIG. 22 again. When the variable aperture 60 switches from the first intermediate state to the second intermediate state, the rotating support 63 continues to rotate relative to the base 61 and the fixing support 62, the hole wall of the rotation hole 653 continues to rotate relative to the rotation column 621, the guide column 631 continues to approach the second end wall 6542 of the guide hole 654, and the aperture of the light transmission hole 650 of the plurality of blades 65 continues to increase. For example, the shape of the light transmission hole 650 of the plurality of blades 65 changes from a circle to a regular polygon.

Refer to FIG. 22 and FIG. 23 again. When the variable aperture 60 switches from the second intermediate state to the end state, the rotating support 63 continues to rotate relative to the fixing support 62, the hole wall of the rotation hole 653 continues to rotate relative to the rotation column 621, and the guide column 631 switches to the state of being close to the second end wall 6542 of the guide hole 654. The light transmission hole 661 of the gasket 66 is exposed relative to the plurality of blades 65, and the light transmission hole 661 of the gasket 66 forms the aperture hole of the variable aperture 60. The aperture hole of the variable aperture 60 changes from a regular polygon to a circle.

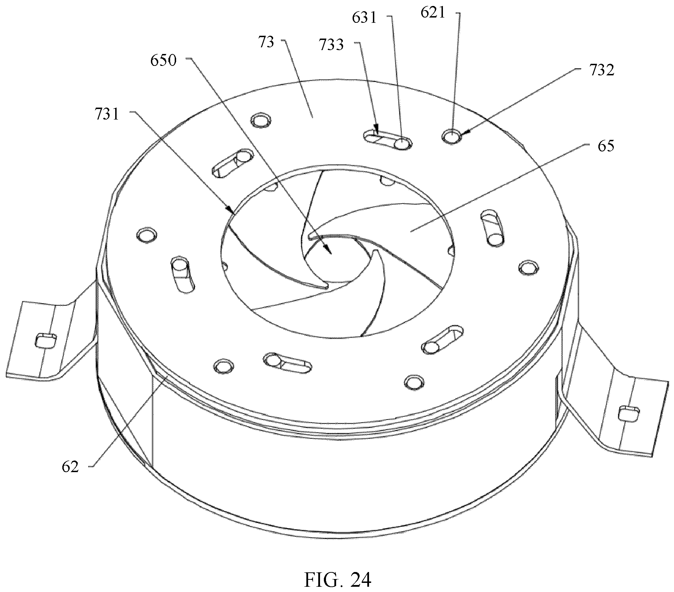

Refer to FIG. 24. With reference to FIG. 4, FIG. 24 is a schematic diagram of a partial structure of the variable aperture 60 shown in FIG. 3. In an implementation, the upper cover 73 may be in an annular structure. A light transmission hole 731 is enclosed on an inner side of the upper cover 73. The upper cover 73 is provided with a plurality of first limiting holes 732 and a plurality of second limiting holes 733. The plurality of first limiting holes 732 are disposed at intervals, and the plurality of first limiting holes 732 surround the light transmission hole 731 of the upper cover 73. The plurality of second limiting holes 733 are disposed at intervals, and the plurality of second limiting holes 733 surround the light transmission hole 731 of the upper cover 73. The plurality of second limiting holes 733 and the plurality of first limiting holes 732 are further disposed at intervals.

Refer to FIG. 24 again. With reference to FIG. 16, in an implementation, the upper cover 73 is fixedly connected to the top of the fixing support 62. In other words, the upper cover 73 is fixedly connected to a side that is of the fixing support 62 and that is away from the base 61. The upper cover 73 covers the plurality of blades 65. In this way, in the Z-axis direction, the upper cover 73 may limit the plurality of blades 65, thereby preventing the plurality of blades 65 from falling out. In addition, the light transmission hole 731 of the upper cover 73 is disposed opposite to the light transmission hole 650 of the plurality of blades 65. In this way, the ambient light may be propagated to the light transmission hole 650 of the plurality of blades 65 through the light transmission hole 731 of the upper cover 73.

In an implementation, a part of the rotation column 621 of the fixing support 62 is disposed in the first limiting hole 732 of the upper cover 73. In this way, a connection between the fixing support 62 and the upper cover 73 is more stable, and the upper cover 73 and the fixing support 62 may form a structure with better integrity. In addition, a part of the guide column 631 of the rotating support 63 is disposed in the second limiting hole 733 of the upper cover 73, and the guide column 631 of the rotating support 63 may slide in the second limiting hole 733. In this way, on the X-Y plane, the second limiting hole 733 may limit the guide column 631 of the rotating support 63, so that the guide column 631 of the rotating support 63 in not prone to shake in the rotating process.

In this embodiment, a center axis of the light transmission hole 731 of the upper cover 73 overlaps the center axis of the light transmission hole 650 of the plurality of blades 65. In another embodiment, the center axis of the light transmission hole 731 of the upper cover 73 may alternatively not overlap the center axis of the light transmission hole 650 of the plurality of blades 65.

The foregoing specifically describes the structure of the variable aperture 60 with reference to related accompanying drawings. The size of the light transmission hole 650 of the plurality of blades 65 of the variable aperture 60 can be accurately adjusted. In addition, the variable aperture 60 in this application may further resolve some technical problems of a conventional variable aperture 60. Details are as follows:
First, when the rotating support 63 is disposed on an outer side of the fixing base 610 (including an outer side of the base 61 and an outer side of the fixing support 62), space needs to be reserved between the rotating support 63 and a component on the outer side of the fixing base 610, to avoid mutual interference between the rotating support 63 and the component on the outer side of the fixing base 610. In this way, the structure of the variable aperture 60 is large, and this is not conducive to miniaturization of the variable aperture 60. However, in this implementation, the rotating support 63 is disposed on the inner side of the fixing base 610, the rotating support 63 does not interfere with the component on the outer side of the fixing base 610, and the component on the outer side of the fixing base 610 may be disposed close to the fixing base 610, thereby facilitating miniaturization of the variable aperture 60.

In addition, the first magnet 67a and the second magnet 67b are fixedly connected to the rotating support 63, and the first coil 68a and the second coil 68b are fixedly connected to the fixing base 610. Therefore, when the first coil 68a and the second coil 68b are powered on, the first magnet 67a and the second magnet 67b may cooperate with each other, to push the rotating support 63 to rotate relative to the fixing base 610. It may be understood that, on one hand, a structure of a drive apparatus including the first magnet 67a, the second magnet 67b, the first coil 68a, and the second coil 68b is relatively simple, and on another hand, the first magnet 67a, the second magnet 67b, the first coil 68a, and the second coil 68b do not need to pull, through moving, the rotating support 63 to rotate. In this way, the variable aperture 60 does not need to provide additional space for moving of the first magnet 67a, the second magnet 67b, the first coil 68a, and the second coil 68b. Space occupied by the first magnet 67a, the second magnet 67b, the first coil 68a, and the second coil 68b is small, thereby facilitating miniaturization of the variable aperture 60.

In addition, the first mounting groove 633 and the second mounting groove 634 are formed on the outer peripheral side surface 630a of the rotating support 63, so that when the first magnet 67a is mounted in the first mounting groove 633 and the second magnet 67b is mounted in the second mounting groove 634, at least a part of the first magnet 67a and at least a part of the second magnet 67b may be embedded in the rotating support 63. In this way, at least the part of the first magnet 67a has an overlapping area with the rotating support 63, and at least the part of the second magnet 67b has an overlapping area with the rotating support 63. At least the part of the first magnet 67a and at least the part of the second magnet 67b do not additionally increase the size of the variable aperture 60, thereby facilitating miniaturization of the variable aperture 60.

In addition, the first through hole 6230 and the second through hole 6240 are formed on a peripheral side part of the fixing base 610, so that when the first coil 68a is disposed in the first through hole 6230 and the second coil 68b is disposed in the second through hole 6240, the first coil 68a and the second coil 68b have overlapping areas with the fixing base 610 in all directions. In this way, the first coil 68a and the second coil 68b may use the space in which the fixing base 610 is located, and the first coil 68a and the second coil 68b do not additionally increase the size of the variable aperture 60, thereby facilitating miniaturization of the variable aperture 60.

The variable aperture 46 in this application also has some advantages. Details are as follows:
In this application, the rotating support 63 is disposed on the inner side of the fixing base 610, so that when the rotating support 63 rotates relative to the fixing base 610, the rotating support 63 does not collide with a component on the outer side of the base 61 and a component on the outer side of the fixing support 62, to further ensure that the size of the aperture of the light transmission hole 650 of the plurality of blades 65 in different states can be accurately controlled.

In addition, compared with a solution in which the first magnet 67a and the second magnet 67b are fixedly connected to the base 61 or the fixing support 62, and the first coil 68a and the second coil 68b are fixedly connected to the rotating support 63, this implementation enables the first magnet 67a and the second magnet 67b to be fixedly connected to the rotating support 63, and the first coil 68a and the second coil 68b to be fixedly connected to the base 61 or the fixing support 62, so that a conducting wire of the first coil 68a and a conducting wire of the second coil 68b do not interfere with the rotating support 63 in the rotating process of the rotating support 63.

In this implementation, the first magnetic conductive sheet 72a and the second magnetic conductive sheet 72b are fixedly connected to the bottom wall of the base 61, so that the magnetic force may be generated between the first magnetic conductive sheet 72a and the first magnet 67a, and the magnetic force may be generated between the second magnetic conductive sheet 72b and the second magnet 67b. In this way, the first magnetic conductive sheet 72a cooperates with the first magnet 67a, and the second magnetic conductive sheet 72b cooperates with the second magnet 67b, so that the connections between the rotating support 63 and the base 61 and between the rotating support 63 and the fixing support 62 are more stable. In other words, stability of the rotating support 63 is better. When the rotating support 63 rotates relative to the fixing base 610, the rotating support 63 is not prone to tilt or shake in the rotating process.

In this implementation, the variable aperture 60 in this application can further implement a closed-loop effect. Specifically, the drive chip 71 may detect the magnetic field strength of the first magnet 67a in different positions. In this way, an angle at which the rotating support 63 rotates relative to the base 61 may be determined by using the magnetic field strength detected by the drive chip 71, to accurately determine a state of the variable aperture 60, that is, accurately determine the size of the aperture of the light transmission hole 650 of the plurality of blades 65 of the variable aperture 60, and further accurately control the amount of light entering the variable aperture 60.

In another embodiment, the first magnet 67a may alternatively use another structure of a mover 67a, and the first coil 68a may alternatively use another structure of a stator 68a. This is not specifically limited in this application. For example, the mover 67a may be a gear, the stator 68a may be a motor, and an output end of the motor may be engaged with the gear. When the motor is powered on, the motor may drive the gear to rotate, and the gear may drive the rotating support 63 to rotate.

In another embodiment, the second magnet 67b may alternatively use another structure of a mover, and the second coil 68b may alternatively use another structure of a stator. This is not specifically limited in this application. For example, the mover may be a gear, the stator may be a motor, and an output end of the motor may be engaged with the gear. When the motor is powered on, the motor may drive the gear to rotate, and the gear may drive the rotating support 63 to rotate.

The foregoing specifically describes the structure of the variable aperture 60 with reference to related accompanying drawings. The following further describes several implementations of the structure of the variable aperture 60 with reference to related accompanying drawings.

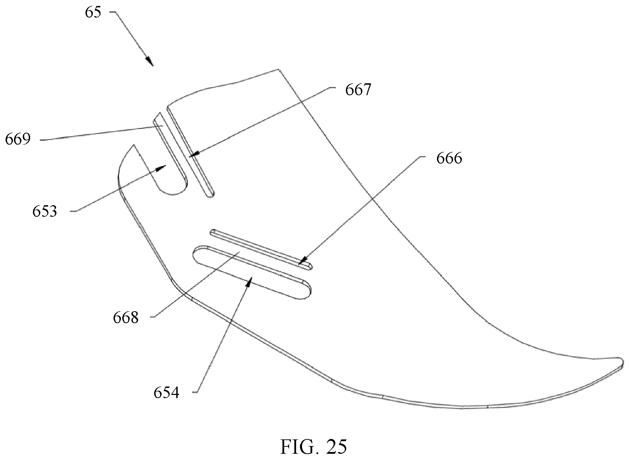

In a second implementation, technical content the same as that in the first implementation is not described again. Refer to FIG. 25. FIG. 25 is a schematic diagram of a structure of another implementation of the blade 65 shown in FIG. 4. The blade 65 is further provided with a first auxiliary hole 666 and a second auxiliary hole 667 that are disposed at intervals. Both the first auxiliary hole 666 and the second auxiliary hole 667 are disposed at intervals with the guide hole 654 and the rotation hole 653.

In an implementation, the first auxiliary hole 666 is disposed around the guide hole 654, and the first auxiliary hole 666 and the guide hole 654 may form an elastic hole structure. Specifically, a first connecting rib 668 is formed between the first auxiliary hole 666 and the guide hole 654. It may be understood that a width of the first connecting rib 668 is small, and hardness of the first connecting rib 668 is small. In this case, the first connecting rib 668 may deform under an external force, and the first connecting rib 668 may restore to an original state without the external force. Therefore, the first connecting rib 668 is elastic to an extent.

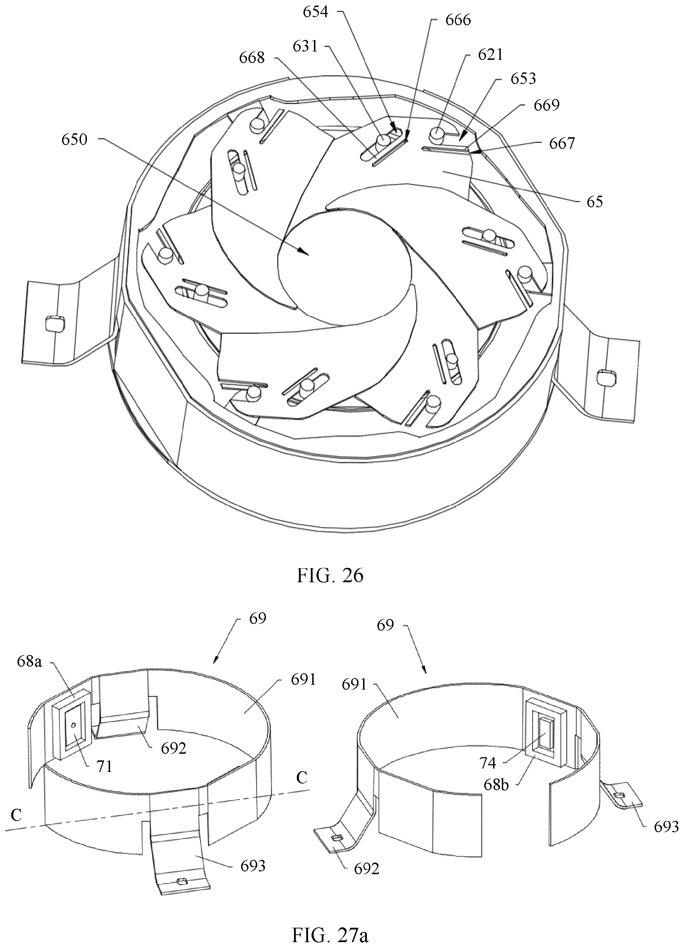

Refer to FIG. 26. With reference to FIG. 25, FIG. 26 is a schematic diagram of a partial structure of the variable aperture 60 in another implementation according to an embodiment of this application. In a process in which the guide column 631 is disposed in the guide hole 654, because the first connecting rib 668 is elastic to an extent, the first connecting rib 668 may provide sufficient assembly space for the guide column 631 through deformation, thereby reducing assembly difficulty between the guide column 631 and the guide hole 654. In addition, after the guide column 631 is disposed in the guide hole 654, the first connecting rib 668 may squeeze the guide column 631 through deformation, so that the guide column 631 can cooperate with the guide hole 654 through interference, that is, zero-gap cooperation can be implemented between the guide column 631 and the guide hole 654. In this way, in an opening and closing process of the blades 65, the guide column 631 does not shake due to a gap between the guide column and the guide hole 654. In this case, the size of the aperture of the light transmission hole 650 of the plurality of blades 65 is more controllable, and precision is higher. It should be noted that, a gap between the guide column 631 and the guide hole 654 is formed in the following cases: In one case, to ensure that the guide column 631 can be disposed in the guide hole 654, in a machining process of the blade 65, a size of an aperture of the guide hole 654 is set to be greater than a diameter of the guide column 631. In another case, in a machining process of the blade 65, due to a mechanical error or a process error, a size of an aperture of the guide hole 654 is greater than a diameter of the guide column 631. Alternatively, in a machining process of the blade 65, a shape of the guide hole 654 is irregular due to a mechanical error or a process error.

In another implementation, the guide column 631 and the guide hole 654 may alternatively be matched in another manner. This is not specifically limited in this application.

In another implementation, a shape of the first auxiliary hole 666 is not limited to the strips shown in FIG. 25 and FIG. 26. For example, the shape of the first auxiliary hole 666 may alternatively be a circle, an arc, or the like.

Refer to FIG. 25 again. In an implementation, the second auxiliary hole 667 is disposed around the rotation hole 653, and the second auxiliary hole 667 and the rotation hole 653 may form an elastic hole structure. Specifically, a second connecting rib 669 is formed between the second auxiliary hole 667 and the rotation hole 653. It may be understood that a width of the second connecting rib 669 is small, and hardness of the second connecting rib 669 is small. In this case, the second connecting rib 669 may deform under an external force, and the second connecting rib 669 may restore to an original state without the external force. The second connecting rib 669 is elastic to an extent. In addition, both the second auxiliary hole 667 and the rotation hole 653 penetrate a side edge of the blade 65. In this way, the second connecting rib 669 is more likely to deform, that is, the second connecting rib 669 has better elasticity.

In another implementation, the second auxiliary hole 667 and the rotation hole 653 may alternatively not penetrate the side edge of the blade 65.

In another implementation, a shape of the second auxiliary hole 667 is not limited to the strips shown in FIG. 25 and FIG. 26. For example, the shape of the second auxiliary hole 667 may alternatively be a circle, an arc, or the like.

Refer to FIG. 26 again. With reference to FIG. 25, in a process in which the rotation column 621 is disposed in the rotation hole 653, because the second connecting rib 669 is elastic to an extent, the second connecting rib 669 may provide sufficient assembly space for the rotation column 621 through deformation, thereby reducing assembly difficulty between the rotation column 621 and the rotation hole 653. In addition, after the rotation column 621 is disposed in the rotation hole 653, the second connecting rib 669 may squeeze the rotation column 621 through deformation, so that the rotation column 621 can cooperate with the rotation hole 653 through interference. In this way, in an opening and closing process of the plurality of blades 65, the rotation column 621 does not shake due to a gap between the rotation column and the rotation hole 653. In this case, the size of the aperture of the light transmission hole of the plurality of blades 65 is more controllable, and precision is higher.

In another implementation, through mutual cooperation between the second auxiliary hole 667 and the rotation hole 653, assembly difficulty of implementing zero cooperation between the rotation column 621 and the rotation hole 653 can also be reduced. It may be understood that, in a process of machining the rotation column 621 and the rotation hole 653, an error usually exists in sizes of the rotation column 621 and the rotation hole 653 due to a factor such as a machining error or a mechanical error. When an aperture of the rotation hole 653 is smaller than a diameter of the rotation column 621, it is difficult to assemble the rotation column 621 into the rotation hole 653. The rotation column 621 in this implementation may be easily assembled in the rotation hole 653 through deformability of the second connecting rib 669.

In an implementation, a material of the blade 65 may be a non-magnetic metal material. For example, the blade 65 may be an aluminum sheet. In this case, hardness of the blade 65 is high, and the first connecting rib 668 and the second connecting rib 669 are not prone to break.

In an implementation, a coating may be formed on a surface of the blade 65. For example, the coating is formed on the surface of the blade 65 by using a vapor plating or sputtering process. The coating may improve smoothness of the blades 65, so that friction between the blades 65 is small in the opening and closing process of the blades 65. In addition, strength of the first connecting rib 668 and the second connecting rib 669 may be further improved, so that the first connecting rib 668 and the second connecting rib 669 are not prone to break.

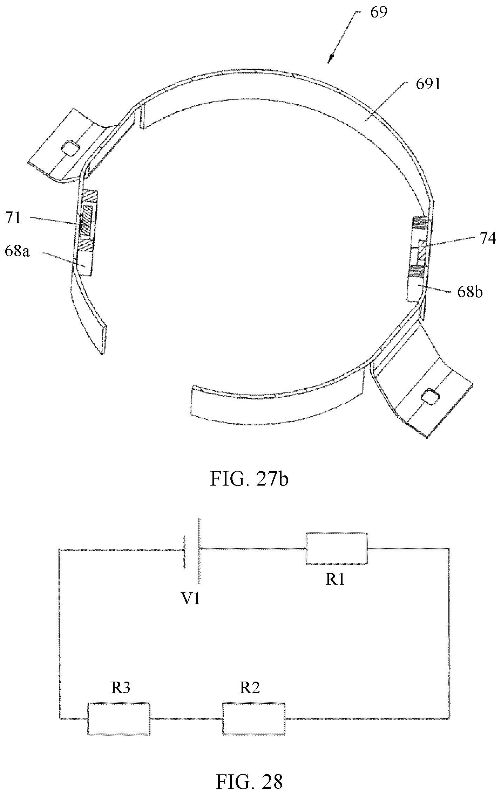

In a third implementation, technical content the same as that in the first implementation is not described again. Refer to FIG. 27a and FIG. 27b. FIG. 27a is a schematic diagram of a partial structure of the variable aperture 60 in another implementation according to an embodiment of this application. FIG. 27b is a schematic cross-sectional view of a part of the variable aperture 60 shown in FIG. 27a at a line C-C. The variable aperture 60 further includes an auxiliary resistor 74, and the auxiliary resistor 74 is fixedly connected to the main part 691 of the flexible circuit board 69 and electrically connected to the main part 691 of the flexible circuit board 69. Compared with the first coil 68a, the auxiliary resistor 74 is disposed close to the second coil 68b. In other words, a distance between the auxiliary resistor 74 and the first coil 68a is greater than a distance between the auxiliary resistor 74 and the second coil 68b. In this case, the auxiliary resistor 74 is far away from the drive chip 71.

For example, the auxiliary resistor 74 is located in a region enclosed by the second coil 68b. In this way, arrangement of the auxiliary resistor 74 and the second coil 68b on the main part 691 of the flexible circuit board 69 is more compact, thereby facilitating miniaturization of the variable aperture 60. In another implementation, a position of the auxiliary resistor 74 is not limited.

Refer to FIG. 28. FIG. 28 is a schematic circuit diagram of the drive chip 71, the first coil 68a, the second coil 68b, and the auxiliary resistor 74 shown in FIG. 27a. The drive chip 71, the first coil 68a, the second coil 68b, and the auxiliary resistor 74 are disposed in series. V1 in FIG. 28 is a supply voltage of the drive chip 71. R1 is a resistance value of the first coil 68a, R2 is a resistance value of the second coil 68b, and R3 is a resistance value of the auxiliary resistor 74. In this implementation, the resistance value R1 of the first coil 68a is equal to the resistance value R2 of the second coil 68b. A sum of the resistance value R3 of the auxiliary resistor 74 and the resistance value R2 of the second coil 68b is greater than the resistance value R1 of the first coil 68a. For example, both the resistance value R1 of the first coil 68a and the resistance value R2 of the second coil 68b are equal to 12.5 ohms (Ω). The resistance value R3 of the auxiliary resistor 74 is equal to 20 ohms (Ω).

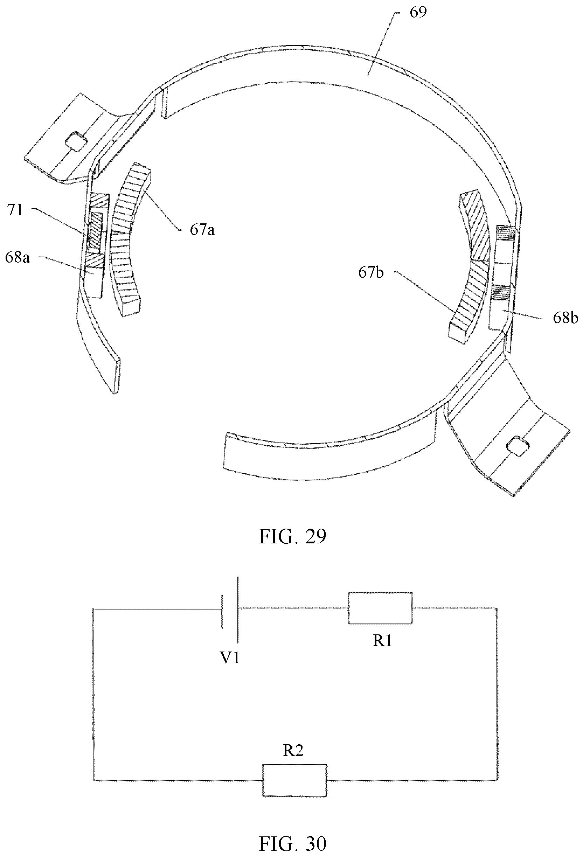

Refer to the following Table 1. Table 1 is a data table of electrical parameters of the variable aperture in this implementation and electrical parameters of a variable aperture in a compared solution. Refer to FIG. 29. FIG. 29 is a schematic cross-sectional view of another implementation of the part of the variable aperture 60 shown in FIG. 27a at the line C-C. A difference between the compared solution and this implementation lies in that the variable aperture 60 in the compared solution does not include the auxiliary resistor 74, and the drive chip, the first coil 68a, and the second coil 68b are disposed in series.

**Table 1 Data table of the electrical parameters of the variable aperture in this implementation and the electrical parameters of the variable aperture in the compared solution**

| | Power supply voltage of the drive chip (V1) | Coil current (mA) | Maximum current (mA) | Total power consumption (mW) | Coil resistance value (Ω) | Coil power consumption (mW) | Resistance value of the auxiliary resistor (Ω) | Power consumption of the auxiliary resistor (mW) | Power consumption of the drive chip (mW) |
|---|---|---|---|---|---|---|---|---|---|
| Compared solution | 2.8 | 25.0 | 93.3 | 70.0 | 25.0 | 15.6 | 0.0 | 0.0 | 54.4 |
| This implementation | 2.8 | 25.0 | 56.0 | 70.0 | 25.0 | 15.6 | 20.0 | 12.5 | 41.9 |

The coil current in the data table may be currents of the first coil and the second coil. The maximum current may be a current when the rotating support is driven to rotate relative to the fixing base against a maximum static friction force. The total power consumption is total power consumption of an entire circuit (including power consumption of the first coil, power consumption of the second coil, power consumption of the drive chip, a loss of conducting wires, and the like). The coil resistance value may be a sum of the resistance value of the first coil and the resistance value of the second coil. The coil power consumption may be a sum of the power consumption of the first coil and the power consumption of the second coil.

It may be understood that, it can be learned from the data in the table that the power consumption of the drive chip in the compared solution is 54.4 mW, and the power consumption of the drive chip 71 in this implementation is 41.9 mW. It is clear that the power consumption of the drive chip 71 in this implementation is low, and the drive chip 71 generates less heat. In this implementation, an auxiliary resistor 74 is connected in series around the second coil 68b, so that when the drive chip 71 provides a current signal for the first coil 68a and the second coil 68b, the auxiliary resistor 74 can implement voltage division, thereby reducing power consumption of the drive chip 71, and further reducing heat generated by the drive chip 71. In this way, the heat generated by the drive chip 71 does not easily affect the peripheral component (for example, the lens assembly 50) of the drive chip 71. In addition, because the auxiliary resistor 74 is far away from the drive chip 71, that is, heat sources of the variable aperture 60 are dispersed, heat generated by the auxiliary resistor 74 is not easily aggregated with the heat generated by the drive chip 71. In this case, the entire variable aperture 60 generates heat more evenly.

In a fourth implementation, technical content the same as that in the first implementation is not described again. Refer to FIG. 30. FIG. 30 is a schematic circuit diagram of the drive chip 71, the first coil 68a, and the second coil 68b in another implementation according to this application. The drive chip 71, the first coil 68a, and the second coil 68b are disposed in series. A sum of a voltage of the first coil 68a and a voltage of the second coil 68b is greater than one sixth of the power supply voltage of the drive chip 71. For example, the power supply voltage of the drive chip 71 is 2.8 volts (V), and the sum of the voltage of the first coil 68a and the voltage of the second coil 68b is 1.2 volts (V).

In an implementation, the resistance value R2 of the second coil 68b is greater than the resistance value R1 of the first coil 68a. Specifically, the resistance value R2 of the second coil 68b may be increased by increasing a quantity of coil turns of the second coil 68b or decreasing a diameter of the conducting wire of the second coil 68b. For example, the resistance value R1 of the first coil 68a is equal to 12.5 ohms (Ω), and the resistance value R2 of the second coil 68b is equal to 32.5 ohms (Ω).

Refer to the following Table 2. Table 2 is a data table of electrical parameters of the variable aperture in this implementation and electrical parameters of a variable aperture in a compared solution. A difference between the compared solution and this implementation lies in that, in the compared solution, the resistance value of the first coil is equal to the resistance value of the second coil. Specifically, in the compared solution, the resistance value of the first coil is equal to 12.5 ohms (Ω), and the resistance value of the second coil is also equal to 12.5 ohms (Ω). In this implementation, the resistance value of the first coil is equal to 12.5 ohms (Ω), and the resistance value of the second coil is equal to 32.5 ohms (Ω).

**Table 2 Data table of the electrical parameters of the variable aperture in this implementation and the electrical parameters of the variable aperture in the compared solution**

| | Power supply voltage of the drive chip (V1) | Coil current (mA) | Maximum current (mA) | Total power consumption (mW) | Coil resistance value (Ω) | Coil power consumption (mW) | Resistance value of the auxiliary resistor (Ω) | Power consumption of the auxiliary resistor (mW) | IC power consumption (mW) |
|---|---|---|---|---|---|---|---|---|---|
| Compared solution | 2.8 | 25.0 | 93.3 | 70.0 | 25.0 | 15.6 | 0.0 | 0.0 | 54.4 |
| This implementation | 2.8 | 25.0 | 56.0 | 70.0 | 45.0 | 28.1 | 0.0 | 0.0 | 41.9 |

It may be understood that, it can be learned from the data in the table that the power consumption of the drive chip 71 in this implementation is 41.9 mW, and the power consumption of the drive chip in the compared solution is 54.4 mW. It is clear that the power consumption of the drive chip 71 in this implementation is low, and the drive chip 71 generates less heat. In this implementation, the resistance value R2 of the second coil 68b is increased, so that the sum of the voltage of the first coil 68a and the voltage of the second coil 68b is greater than one sixth of the power supply voltage of the drive chip 71. Therefore, when the drive chip 71 provides a current signal for the first coil 68a and the second coil 68b, the first coil 68a and the second coil 68b may obtain more voltages, thereby reducing power consumption of the drive chip 71, and further reducing heat generated by the drive chip 71. In this way, the heat generated by the drive chip 71 does not easily affect the peripheral component (for example, the lens assembly 50) of the drive chip 71. In addition, because the resistance value of the second coil 68b is greater than the resistance value of the first coil 68a, the second coil 68b obtains more voltages. Because the second coil 68b is disposed away from the drive chip 71, heat generated by the second coil 68b does not easily increase a temperature of a region in which the drive chip 71 is located.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A variable aperture (60), comprising a fixing base (610), a rotating support (63), a mover (67a), a stator (68a), and a plurality of blades (65), wherein
the rotating support (63) is located on an inner side of the fixing base (610), and is rotatably connected to the fixing base (610), and the rotating support (63) encloses space (630);
the plurality of blades (65) jointly enclose a light transmission hole (650), the light transmission hole (650) is in communication with the space (630), and each blade (65) is rotatably connected to the fixing base (610) and slidably connected to the rotating support (63); and
the mover (67a) is fixedly connected to an outer peripheral side surface (630a) of the rotating support (63); the stator (68a) is fixedly connected to the fixing base (610); the stator (68a) faces the mover (67a); the mover (67a) is configured to drive, in cooperation with the stator (68a), the rotating support (63) to rotate relative to the fixing base (610), and each blade (65) to slide relative to the rotating support (63) and rotate relative to the fixing base (610); and an aperture of the light transmission hole (650) of the plurality of blades (65) changes.

2. The variable aperture (60) according to claim 1, wherein the mover (67a) is a first magnet (67a) and the stator (68a) is a first coil (68a).

3. The variable aperture (60) according to claim 2, wherein a polarization direction of the first magnet (67a) is parallel to a circumferential direction of the rotating support (63).

4. The variable aperture (60) according to claim 2 or 3, wherein the outer peripheral side surface (630a) of the rotating support (63) recesses toward a center of the rotating support (63) to form a first mounting groove (633), and at least a part of the first magnet (67a) is fixedly connected to the first mounting groove (633).

5. The variable aperture (60) according to any one of claims 2 to 4, wherein the variable aperture (60) further comprises a second magnet (67b) and a second coil (68b);
the second magnet (67b) is fixedly connected to the outer peripheral side surface (630a) of the rotating support (63), the second coil (68b) is fixedly connected to the fixing base (610), and the second coil (68b) faces the second magnet (67b); and
the second magnet (67b) is configured to: when the second coil (68b) is powered on, the second magnet (67b) is subject to an acting force, and the second magnet (67b) drives the rotating support (63) to rotate relative to the fixing base (610), wherein a direction in which the second magnet (67b) drives the rotating support (63) to rotate relative to the fixing base (610) is the same as a direction in which the first magnet (67a) drives the rotating support (63) to rotate relative to the fixing base (610).

6. The variable aperture (60) according to claim 5, wherein the second magnet (67b) and the first magnet (67a) are center-symmetric with respect to the center of the rotating support (63).

7. The variable aperture (60) according to claim 5 or 6, wherein the fixing base (610) is provided with a first through hole (6230) and a second through hole (6240) that are disposed at intervals, and the first through hole (6230) and the second through hole (6240) form openings on an inner peripheral side surface and an outer peripheral side surface of the fixing base (610);
the variable aperture (60) further comprises a flexible circuit board (69), and the flexible circuit board (69) surrounds the outer peripheral side surface of the fixing base (610), and is fixedly connected to the outer peripheral side surface of the fixing base (610);
the first coil (68a) is fixedly connected to an inner peripheral side surface of the flexible circuit board (69) and electrically connected to the flexible circuit board (69), and the first coil (68a) is located in the first through hole (6230); and
the second coil (68b) is fixedly connected to the inner peripheral side surface of the flexible circuit board (69) and electrically connected to the flexible circuit board (69), and the second coil (68b) is located in the second through hole (6240).

8. The variable aperture (60) according to claim 7, wherein the variable aperture (60) further comprises a drive chip (71), the drive chip (71) is fixedly connected to the flexible circuit board (69) and electrically connected to the flexible circuit board (69), and the drive chip (71) is configured to supply power to the first coil (68a) and the second coil (68b).

9. The variable aperture (60) according to claim 8, wherein the drive chip (71), the first coil (68a), and the second coil (68b) are disposed in series; and
a sum of a voltage of the first coil (68a) and a voltage of the second coil (68b) is greater than one sixth of a power supply voltage of the drive chip (71).

10. The variable aperture (60) according to claim 8, wherein the variable aperture (60) further comprises an auxiliary resistor (74), and the auxiliary resistor (74) is fixedly connected to the flexible circuit board (69) and electrically connected to the flexible circuit board (69); and
the drive chip (71), the first coil (68a), the second coil (68b), and the auxiliary resistor (74) are disposed in series.

11. The variable aperture (60) according to claim 10, wherein the auxiliary resistor (74) is located in a region enclosed by the second coil (68b).

12. The variable aperture (60) according to any one of claims 8 to 11, wherein the drive chip (71) is located in a region enclosed by the first coil (68a), and the drive chip (71) is further configured to detect magnetic field strength of the first magnet (67a) in different positions.

13. The variable aperture (60) according to any one of claims 5 to 12, wherein the variable aperture (60) further comprises a first magnetic conductive sheet (72a) and a second magnetic conductive sheet (72b), the first magnetic conductive sheet (72a) and the second magnetic conductive sheet (72b) are fixedly connected to the fixing base (610) at intervals, the first magnetic conductive sheet (72a) is located around the first magnet (67a), and the second magnetic conductive sheet (72b) is located around the second magnet (67b).

14. The variable aperture (60) according to any one of claims 2 to 13, wherein the fixing base (610) has a plurality of rotation columns (621) disposed at intervals, and the rotating support (63) has a plurality of guide columns (631) disposed at intervals; and
each blade (65) is provided with a rotation hole (653) and a guide hole (654) that are disposed at intervals, the plurality of rotation columns (621) are rotatably connected to the rotation holes (653) of the plurality of blades (65) in a one-to-one correspondence, and the plurality of guide columns (631) are slidably connected to the guide holes (654) of the plurality of blades (65) in a one-to-one correspondence.

15. The variable aperture (60) according to claim 14, wherein the blade (65) is further provided with a first auxiliary hole (666), and the first auxiliary hole (666) is disposed at intervals with the guide hole (654) and the rotation hole (653), and is located around the guide hole (654).

16. The variable aperture (60) according to claim 14 or 15, wherein the blade (65) is further provided with a second auxiliary hole (667), and the second auxiliary hole (667) is disposed at intervals with the guide hole (654) and the rotation hole (653), and is located around the rotation hole (653).

17. The variable aperture (60) according to any one of claims 2 to 16, wherein the variable aperture (60) further comprises a gasket (66), the gasket (66) is fixedly connected to the rotating support (63), and is located on a side that is of the plurality of blades (65) and that faces the rotating support (63), the gasket (66) has a light transmission hole (661), and the light transmission hole (661) of the gasket (66) is in communication with the light transmission hole (650) of the plurality of blades (65) and the space (630) of the rotating support (63);
the variable aperture (60) comprises an initial state, an intermediate state, and an end state;
when the variable aperture (60) is in the initial state or the intermediate state, a maximum aperture of the light transmission hole (650) of the plurality of blades (65) is less than an aperture of the light transmission hole (661) of the gasket (66); and
when the variable aperture (60) is in the end state, a minimum aperture of the light transmission hole (650) of the plurality of blades (65) is greater than or equal to the aperture of the light transmission hole (661) of the gasket (66).

18. The variable aperture (60) according to claim 17, wherein an inner edge of each blade (65) comprises a first segment (655a) and a second segment (655b) connected to the first segment (655a), the first segment (655a) is in an arc shape, and the second segment (655b) is in a straight-line shape or an arc shape;
the intermediate state of the variable aperture (60) comprises a first intermediate state and a second intermediate state;
when the variable aperture (60) is in the initial state, a shape of the light transmission hole (650) of the plurality of blades (65) is a polygon, and the light transmission hole (650) of the plurality of blades (65) is formed by a part of the first segment (655a) of each blade (65);
when the variable aperture (60) is in the first intermediate state, the shape of the light transmission hole (650) of the plurality of blades (65) is a circle, and the light transmission hole (650) of the plurality of blades (65) is formed by the first segment (655a) of each blade (65); and
when the variable aperture (60) is in the second intermediate state, the shape of the light transmission hole (650) of the plurality of blades (65) is a polygon, and the light transmission hole (650) of the plurality of blades (65) is formed by a part of the second segment (655b) of each blade (65).

19. The variable aperture (60) according to any one of claims 2 to 18, wherein the variable aperture (60) further comprises a ball (64), and the ball (64) is rotatably connected to the fixing base (610) and rollingly connected to the rotating support (63).

20. The variable aperture (60) according to claim 19, wherein the fixing base (610) comprises a base (61) and a fixing support (62), and the fixing support (62) is connected to a top of the base (61);
the base (61) is provided with a first groove (613), the fixing support (62) is provided with a second groove (622), the first groove (613) and the second groove (622) are assembled into a rotating groove (6220), and the ball (64) is rotatably connected in the rotating groove (6220); and
the rotating support (63) is further provided with a rolling groove (632), the rolling groove (632) extends along the circumferential direction of the rotating support (63), the rolling groove (632) is disposed opposite to the rotating groove (6220), and the ball (64) is slidably connected in the rolling groove (632).

21. The variable aperture (60) according to any one of claims 1 to 20, wherein the rotating support (63) being located on the inner side of the fixing base (610) comprises that a projection of the rotating support (63) on a reference plane at least partially overlaps a projection of the fixing base (610) on the reference plane, and the reference plane is parallel to an optical axis direction of the variable aperture (60).

22. The variable aperture (60) according to any one of claims 1 to 21, wherein the outer peripheral side surface (630a) of the rotating support (63) is parallel to the optical axis direction of the variable aperture (60).

23. The variable aperture (60) according to any one of claims 1 to 22, wherein that the stator (68a) faces the mover (67a) comprises that a plane on which the stator (68a) is located and a plane on which the mover (67a) is located are parallel to the optical axis direction of the variable aperture (60).

24. A camera module (100), comprising a lens assembly (50) and the variable aperture (60) according to any one of claims 1 to 23, wherein the variable aperture (60) is fixedly connected to the lens assembly (50), and is located on a light inlet side of the lens assembly (50).

25. The camera module (100) according to claim 24, wherein the lens assembly (50) comprises a motor (51) and a lens (52), the lens (52) is disposed in the motor (51), and the motor (51) is configured to drive the lens (52) to move along an optical axis direction of the camera module (100); and
the variable aperture (60) is fixedly connected to the lens (52), and is located on a light inlet side of the lens (52).

26. An electronic device (1), comprising a housing (200) and the camera module (100) according to claim 24 or 25, wherein the camera module (100) is disposed in the housing (200).
